# EUROPÄISCHE PATENTSCHRIFT

(11) **EP 3 687 060 B1**
(45) Veröffentlichungstag und Bekanntmachung des Hinweises auf die Patenterteilung: **21.08.2024**
(21) Anmeldenummer: 20157474.6
(22) Anmeldetag: 20.12.2017
(51) Int. Cl.: H02S 20/10

(54) **PHOTOVOLTAIK-ANLAGE**
PHOTOVOLTAIC SYSTEM
INSTALLATION PHOTOVOLTAÏQUE

(30) Priorität: 23.12.2016 DE 102016015436
(43) Veröffentlichungstag der Anmeldung: 29.07.2020
(62) Teilanmeldung aus: 17822277.4
(73) Patentinhaber: Next2Sun GmbH, 66663 Merzig (DE)
(72) Erfinder: Hildebrandt, Heiko, 79110 Freiburg (DE); Probst, Markus, 66780 Rehlingen-Siersburg (DE); Brill, Thomas, 66701 Beckingen-Reimsbach (DE); Zwosta, Nicolai, 10555 Berlin (DE); Baldy, Robert, 10555 Berlin (DE)
(74) Vertreter: Mertzlufft-Paufler, Cornelius

(56) Entgegenhaltungen:
- EP-A1- 2 669 596
- EP-A1- 2 848 752
- DE-U1- 202010 017 184
- DE-U1- 202014 105 516
- DE-U1- 9 314 973
- JP-A- 2002 076 416
- JP-A- 2003 229 591
- JP-A- 2004 335 903
- JP-A- 2006 080 568
- JP-A- 2009 302 123
- US-A1- 2011 005 583

## Beschreibung

Die Erfindung betrifft eine Photovoltaik(PV)-Anlage mit mehreren bifazialen Photovoltaik-Modulen, die aufrecht stehend an einer Tragkonstruktion angeordnet sind. Klassische PV-Anlagen, die unifaziale PV-Module zur Stromerzeugung verwenden, werden häufig in geneigter Form aufgestellt. Dabei wird die einzige aktive Fläche der jeweiligen PV-Module, welche solare Strahlungsenergie in elektrische Energie wandeln kann, typischerweise nach Süden ausgerichtet. Solche Anlagen haben den Nachteil, dass sie ihre Spitzenleistung in der Mittagszeit abgeben. Dies kann das Stromnetz belasten, nämlich bei einem Überangebot derartigen Stromes.

Daher werden seit einigen Jahren auch PV-Anlagen mit PV-Modulen erprobt, welche beidseitig aktive Flächen aufweisen. Diese als bifazial bezeichneten PV-Module werden aufrecht positioniert, sodass Vorder- und Rückseite jeweils von der Sonne bestrahlt werden. Werden die bifazialen PV-Module derartiger PV-Anlagen in Nord-Süd-Richtung aufgestellt, so können sie Sonnenlicht aus östlichen und westlichen Richtungen, insbesondere in frühen Morgenstunden und späten Abendstunden, einfangen. Damit wird eine zu klassischen Anlagen komplementäre Leistungsabgabe erreicht, die um die Mittagszeit gering ausfällt, jedoch am Morgen und am Abend Spitzenwerte erreicht. Eine solche Strom-Tageskurven-Charakteristik ist im Sinne eines gleichmäßigen Stromangebots im Netz über den Tag verteilt vorteilhaft. Daneben können PV-Anlagen mit bifazialen PV-Modulen jedoch auch in anderen Orientierungen als in Nord-Süd-Richtung vorteilhaft eingesetzt werden.

Bei bifazialen PV-Modulen stellen sich im Unterschied zu unifazialen PV-Modulen neuartige technische Probleme, da auch die Rückseite der Module zur Stromerzeugung genutzt werden soll. Die bisher für unifaziale PV-Module entwickelten Tragkonstruktionen und Aufstellungskonzepte sind daher nur bedingt anwendbar, beziehungsweise würden aufwändige und daher teure Anpassungen erfordern.

Aus der DE2014105516U1, JP2004335903, JP20020766416, JP2003229591, JP2006080568 und US2001/0005583 A1 sind PV-Anlagen mit bifazialen PV-Modulen bekannt. Aus der EP2669596 A1 ist eine PV-Anlage mit drehbar aufgehangenen PV-Modulen bekannt. Aus der DE9314973U ist ein drehbar verankerter Pfosten bekannt. Aus der JP2009302123 und EP2848752A1 sind PV-Anlagen mit Tragkonstruktionen bekannt, bei denen die Pfosten über jeweilige Halte- und Befestigungsabschnitte in vertikaler Richtung höhenverstellbar und durch Drehen verkippbar sind.

Eine Aufgabe der vorliegenden Erfindung ist es daher, eine PV-Anlage bereit zu stellen, bei der mehrere bifaziale PV-Module in senkrechter Anordnung montiert werden können und die den speziellen Anforderungen von bifazialen Modulen gerecht wird. Hierzu soll insbesondere eine Tragkonstruktion bereitgestellt werden, die sich nicht nur kostengünstig fertigen lässt, sondern auch ein zügiges und daher preisgünstiges Aufstellen der PV-Anlage ermöglicht. Zudem soll die Tragkonstruktion eine ausreichende Standfestigkeit bei typischen Witterungsbedingungen aufweisen.

Der Erfindung liegt ferner die Aufgabe zugrunde, die Effizienz der Wandlung von Sonnenlicht in elektrische Energie für PV-Anlagen zu verbessern.

Zur Lösung dieser Aufgaben sind erfindungsgemäß bei einer Photovoltaik-Anlage die Merkmale von Anspruch 1 vorgesehen. Insbesondere wird somit erfindungsgemäß zur Lösung der Aufgabe bei einer Photovoltaik-Anlage der eingangs genannten Art vorgeschlagen, dass die Tragkonstruktion mehrere Pfosten aufweist, die an oder im Erdreich befestigt, insbesondere verankert, sind, wobei an den Pfosten Riegel befestigt sind, die jeweils zwei benachbarte Pfosten miteinander verbinden und wobei jeweils zwei Pfosten und zwei Riegel ein im Wesentlichen rechteckiges Montagefeld definieren, in dem mindestens ein PV-Modul angeordnet ist. Ferner wird vorgeschlagen, dass die Pfosten zumindest in einen mit dem Erdreich verbundenen Befestigungsabschnitt und einen damit verbundenen Halteabschnitt, der sich oberhalb des Befestigungsabschnitts erstreckt, unterteilt sind, sodass die Pfosten zweiteilig ausgebildet sind, wobei der Befestigungsabschnitt und der Halteabschnitt jeweils als ein Längsprofil ausgestaltet sind, ferner dass an dem Befestigungsabschnitt und dem Halteabschnitt jeweils korrespondierende Kontaktflächen ausgebildet sind, wobei die beiden Abschnitte des jeweiligen Pfostens an den Kontaktflächen aneinander anliegen und somit überlappen. Schließlicht ist vorgesehen, dass die Kontaktflächen plan ausgestaltet sind, sodass der Befestigungsabschnitt und der Halteabschnitt im montierten Zustand Rücken an Rücken aneinander liegen und die Überlappung zwischen Befestigungsabschnitt und Halteabschnitt drehbar ausgestaltet ist. Schließlich ist noch vorgesehen, dass der Halteabschnitt entlang der Längsrichtung des Befestigungsabschnitts verschiebbar ausgestaltet ist.

Ein erfindungsgemäßes Montagefeld kann demnach ein PV-Modul oder mehrere PV-Module aufnehmen, wobei auch weitere Unterteilungen des Montagefelds, beispielsweise mittels zusätzlicher Riegel und/oder vertikal verlaufender Zwischenpfosten, vorgesehen sein können. Als im Wesentlichen rechteckig kann das Montagefeld gemäß der Erfindung insbesondere dann angesehen werden, wenn das Montagefeld zur Aufnahme eines PV-Modules mit rechteckiger Außenkontur geeignet ist. Daher kann erfindungsgemäß insbesondere vorgesehen sein, dass jeweils zwei Pfosten und zwei Riegel ein Montagefeld definieren, in dem mindestens ein PV-Modul angeordnet ist, wobei Kanten der Pfosten und Riegel, welche zu den PV-Modulen ausgerichtet sind und somit das Montagefeld begrenzen, vorzugsweise gleichmäßig, beabstandet zu Außenkanten des mindestens einen PV-Moduls angeordnet sind.

In den allermeisten Aufstellungssituationen ist es vorteilhaft, wenn die mehreren bifazialen Photovoltaik-Module senkrecht stehend an der Tragkonstruktion angeordnet sind.

Mit anderen Worten stellt die Erfindung somit eine Tragkonstruktion bereit, bei der Pfosten und Riegel in bevorzugt regelmäßigen Abständen und bevorzugt in rechten Winkeln miteinander verbunden sind, sodass jeweils zwei Pfosten und zwei Riegel ein rechteckiges Montagefeld definieren, in welches ein bifaziales PV-Modul in senkrechter Aufhängung eingesetzt ist. Damit können die PV-Module beidseitig Sonnenlicht einsammeln, um dieses in elektrische Energie zu wandeln.

Erfindungsgemäß ist es für eine hohe Steifigkeit der Tragkonstruktion vorteilhaft, wenn zumindest einzelne Riegel beidseitig an Pfosten durch Befestigungsmittel befestigt sind. Hierbei kann eine zweckmäßige Befestigung der Riegel im Sinne der Erfindung insbesondere durch Verschraubungen, insbesondere Bohrschrauben oder Gewindeschrauben, durch Nieten, Stifte, sowie durch Verschweißen, Verkleben oder durch einfachen Formschluss realisiert sein.

Von Vorteil ist dabei, dass eine erfindungsgemäße PV-Anlage mit den Merkmalen des Anspruchs 1 kostengünstig hergestellt sowie effizient und daher kostengünstig aufgestellt werden kann. Gleichzeitig gewährleistet die erfindungsgemäße Tragkonstruktion eine hohe Stabilität, insbesondere gegen Windlasten sowie eine effiziente Ausnutzung der aktiven Flächen der bifazialen Module.

Erfindungsgemäß kann die Tragkonstruktion beispielsweise mittels einer Verankerung im Erdreich fundamentiert sein. Diese kann beispielsweise durch Erdanker, Erdschrauben, Rammpfosten oder Betonfundamente realisiert sein, wobei ergänzend Abspannungen vorgesehen sein können. Ist eine Verankerung im Erdreich zu vermeiden, zum Beispiel bei Aufstellung der PV-Anlage auf Deponieflächen, so kann erfindungsgemäß auch eine Fundamentierung der Tragkonstruktion mittels einer Beschwerung der Pfosten am Boden erreicht werden. Weiter können nicht nur die Pfosten, sondern auch die Riegel in Form von Längsprofilen, beispielsweise als Aluminium-Stranggussprofile, ausgestaltet sein, wodurch ein besonders sparsamer Materialeinsatz und damit eine leichte Tragkonstruktion ermöglicht werden. Erfindungsgemäß kann die Tragkonstruktion beispielsweise aus C-, S-, U-, Σ- oder Ω-Profilen, insbesondere aus Kombinationen solcher Profile, hergestellt sein. Hierbei können beispielsweise auch schräge und/oder runde Formelemente an den Pfosten und/oder Riegeln vorgesehen sein, um die Verschattung der PV-Module zu minimieren. Eine weitere erfindungsgemäße Ausgestaltung sieht Pfosten und/oder Riegel aus warm- oder kaltgewalztem Stahl vor, vorzugsweise versehen mit einem Korrosionsschutz.

Erfindungsgemäß kann die Aufgabe auch durch weitere vorteilhafte Ausführungen der Unteransprüche gelöst werden.

Beispielsweise ist es erfindungsgemäß vorteilhaft, wenn in der Gebrauchsstellung der PV-Anlage die Pfosten im Wesentlichen vertikal und/oder die Riegel im Wesentlichen horizontal ausgerichtet sind. Durch eine derartige Ausrichtung der Pfosten und Riegel kann insbesondere gewährleistet werden, dass zu den PV-Modulen ausgerichtete Kanten der Pfosten und Riegel, welche die einzelnen Montagefelder begrenzen, vorzugsweise gleichmäßig, beabstandet zu Außenkanten von rechteckigen PV-Modulen der PV-Anlage angeordnet sind.

Hierdurch ist/sind für rechteckige PV-Module, die am Markt typisch sind, ein sparsamer Materialeinsatz für die Tragkonstruktion und/oder eine gute Flächenausnutzung erreichbar, da der Abstand der Pfosten und Riegel zu den PV-Modulen möglichst klein gewählt werden kann. Anders als bei herkömmlichen PV-Anlagen für unifaziale PV-Module wird hierbei insbesondere vermieden, dass Pfosten oder Riegel unterhalb beziehungsweise hinter einem PV-Modul verlaufen, was in einer unerwünschten Abschattung der PV-Module resultieren würde.

Daneben kann bei einer erfindungsgemäßen PV-Anlage beispielsweise vorgesehen sein, dass in vertikaler Richtung mehrere, insbesondere bis zu vier, PV-Module übereinander angeordnet sind. Durch das Vorsehen mehrerer übereinander verlaufender Reihen aus PV-Modulen lässt sich somit die nutzbare aktive Fläche insgesamt steigern, ohne dass zusätzliche Pfosten aufgestellt werden müssen. Das Vorsehen von mehr als vier übereinander angeordneten PV-Modulen hat erfindungsgemäß den Nachteil, dass die Windlast erheblich zunimmt, sodass die Fundamentierung der Pfosten wesentlich aufwendiger und damit teurer ausgestaltet sein muss. Daher schlägt die Erfindung vor, die Anzahl übereinander angeordneter Module auf vier zu begrenzen. Erfindungsgemäß liegt das Optimum der Zeilenzahl von übereinander angeordneten PV-Modulen zwischen zwei und drei.

Gemäß der Erfindung ist es ferner bevorzugt, wenn horizontal benachbarte PV-Module in vertikaler Richtung versetzt zueinander angeordnet sind. Durch diese, für klassische Anlagen untypische, Ausgestaltung wird eine besonders effiziente Bauweise der Tragkonstruktion ermöglicht. Dies gilt insbesondere dann, wenn der vertikale Versatz zwischen horizontal benachbarten PV-Modulen mindestens die Höhe eines Riegels beträgt. Damit können Riegel vertikal übereinander liegend an den Pfosten montiert werden, was für zahlreiche erfindungsgemäße Ausgestaltungen der Tragkonstruktion vorteilhaft ist. Insbesondere können somit die jeweiligen Befestigungspunkte von horizontal benachbarten Riegeln an einem Pfosten vertikal übereinander liegend angeordnet sein. Dies ermöglicht die effiziente Ausnutzung von Flanschen und Laschen an den Pfosten, wie noch genauer zu erläutern sein wird.

Für ein möglichst effizientes Aufstellen der Pfosten der PV-Anlage ist wie erwähnt erfindungsgemäß vorgesehen, dass die Pfosten in einen mit dem Erdreich verbundenen Befestigungsabschnitt und einen mit dem Befestigungsabschnitt verbindbaren oder verbundenen Halteabschnitt unterteilt sind. Hierbei erstreckt sich der Halteabschnitt oberhalb des Befestigungsabschnitts. Von Vorteil ist dabei, dass der Befestigungsabschnitt zunächst unabhängig von dem Halteabschnitt in oder am Erdreich fundamentiert werden kann. Dies ist beispielsweise dann vorteilhaft, wenn der Befestigungsabschnitt durch Einrammen in das Erdreich fundamentiert werden soll. Hierzu kann der Befestigungsabschnitt insbesondere in Form eines Rammprofils ausgestaltet sein, sodass der Befestigungsabschnitt eine ausreichende Steifigkeit für ein Einrammen aufweist.

Ferner wurde bereits eingangs erwähnt, dass sowohl der Halteabschnitt als auch der Befestigungsabschnitt erfindungsgemäß als Längsprofil ausgestaltet sind und zwar bevorzugt aus Metall. Von Vorteil ist dabei, dass insbesondere verschiedene Profile miteinander kombiniert werden können. Beispielsweise kann ein C-, U- oder Σ-Profil, das für ein Einrammen geeignet ist, als Befestigungsabschnitt mit einem S- oder Ω-Profil, die sich jeweils weniger für ein Einrammen eignen, als Halteabschnitt des Pfostens kombiniert werden. Ferner kann auch vorgesehen sein, dass der Halteabschnitt schwächer als der Befestigungsabschnitt ausgebildet ist, um Material einzusparen. Dies kann beispielsweise durch andere Profilwahl, insbesondere andere Profildimensionierung, oder durch eine Materialschwächung erreicht sein.

Nach dem Fundamentieren des Befestigungsabschnitts wird der Halteabschnitt an dem Befestigungsabschnitt ausgerichtet und fest mit diesem verbunden, beispielsweise mittels Schrauben mit selbstschneidendem Gewinde, die in, möglicherweise vorgebohrte, Löcher einschraubbar sind. Wie erwähnt ist hierzu erfindungsgemäß vorgesehen, dass an dem Befestigungsabschnitt und dem Halteabschnitt jeweils korrespondierende plane Kontaktflächen ausgebildet sind. An diesen Kontaktflächen liegen die beiden Abschnitte aneinander an und überlappen somit. Damit wird eine Möglichkeit geschaffen, Abweichungen der Höhe des Befestigungsabschnitts durch Ausrichten des Halteabschnitts in Bezug auf den Befestigungsabschnitt auszugleichen. Dazu ist wie eingangs erwähnt vorgesehen, dass der Halteabschnitt, insbesondere bei Anliegen mit der Kontaktfläche an dem Befestigungsabschnitt, entlang der Längsrichtung des Befestigungsabschnitts verschiebbar ausgestaltet ist.

Erfindungsgemäß ist zudem die Überlappung zwischen Befestigungs- und Halteabschnitt drehbar ausgestaltet. Damit können die beiden Abschnitte eines Pfostens bei Anliegen der korrespondierenden Kontaktflächen gegeneinander verdreht werden beziehungsweise verdreht sein. Dies kann beispielsweise durch eine plane Ausgestaltung der Kontaktfläche erreicht werden, sodass Befestigungs- und Halteabschnitt im montierten Zustand Rücken an Rücken aneinander liegen. Durch eine drehbare Ausgestaltung der Überlappung wird eine Verdrehung der Längsachsen der beiden Abschnitte des Pfostens gegeneinander ermöglicht, wodurch ein verbesserter Ausgleich von windschiefen Ausrichtungen des Befestigungsabschnitts erreicht wird, die beim Fundamentieren desselben entstehen können.

Gemäß der Erfindung ist es ferner vorteilhaft, wenn die einzelnen PV-Module, also insbesondere Außenkanten der PV-Module, von den Pfosten und/oder Riegeln beabstandet angeordnet sind. Denn damit können Abschattungen der aktiven Fläche der PV-Module durch Pfosten und/oder Riegel vermieden werden. Hierbei ist es erfindungsgemäß bevorzugt, wenn die Beabstandung nur so groß gewählt wird, dass eine Abschattung bis zu einem Einfallswinkel von maximal 75° ausgeschlossen ist. Damit wird ein übermäßiger Platzbedarf für die Beabstandung vermieden, sodass eine effiziente Flächenausnutzung ermöglicht wird. Generell ist es erfindungsgemäß bevorzugt, wenn die PV-Module mittig in Bezug auf die Außenkanten von Pfosten und/oder Riegeln montiert sind. Denn dadurch lässt sich eine minimale Abschattung beider Seiten der bifazialen PV-Module erzielen.

Unter Einfallswinkel wird hier und im Folgenden derjenige Winkel verstanden, den ein einfallender Sonnenstrahl mit einem Lot einer aktiven Fläche eines PV-Moduls einschließt. Somit entspricht ein senkrechter Lichteinfall auf die aktive Fläche eines PV-Moduls einem Einfallswinkel von 0°. Da die PV-Module senkrecht angeordnet sind, kann der Einfallswinkel insbesondere ein seitlicher Einstrahlwinkel sein.

Eine hoch effiziente PV-Anlage kann gemäß der Erfindung erreicht werden, wenn die aktiven Flächen der PV-Module von den Pfosten und/oder Riegeln beabstandet angeordnet sind. Dadurch kann weitgehend vermieden werden, dass bei schrägem Lichteinfall die Pfosten oder Riegel Randbereiche der aktiven Flächen der PV-Module verschatten, was sich negativ auf die Effizienz der Anlage auswirken würde.

Gemäß der Erfindung ist es besonders vorteilhaft, wenn die aktiven Flächen der PV-Module dabei derart von den Pfosten beabstandet sind, dass zumindest bis zu einem Einfallswinkel von 20°, besonders bevorzugt zumindest bis zu einem Einfallswinkel von 30°, eine Abschattung der aktiven Fläche durch Pfosten ausgeschlossen ist. Alternativ oder ergänzend kann vorgesehen sein, dass die aktiven Flächen der PV-Module von den Riegeln derart beabstandet angeordnet sind, dass zumindest bis zu einem Einfallswinkel von 25°, bevorzugt zumindest bis zu einem Einfallswinkel von 30° oder sogar 40°, eine Abschattung der aktiven Fläche durch Riegel ausgeschlossen ist.

Eine noch kompaktere PV-Anlage kann erfindungsgemäß dadurch erreicht werden, dass die aktiven Flächen der PV-Module an einander gegenüberliegenden Seiten asymmetrisch beabstandet zu Pfosten und/oder Riegeln angeordnet sind. Beispielsweise kann vorgesehen sein, dass einzelne PV-Module so von den Pfosten beabstandet angeordnet sind, dass für nördliche Richtungen zumindest bis zu einem Einfallswinkel von 20°, bevorzugt zumindest bis zu einem Einfallswinkel von 30°, in Bezug auf die aktive Fläche des PV-Moduls eine Abschattung derselben ausgeschlossen ist, während für südliche Richtungen zumindest bis zu einem Einfallswinkel von 45°, bevorzugt zumindest bis zu einem Einfallswinkel von 60°, in Bezug auf die aktive Fläche des PV-Moduls eine Abschattung derselben ausgeschlossen ist.

Bei horizontal verlaufenden Riegeln genügt es gemäß der Erfindung, wenn die PV-Module nur zu solchen Riegeln beabstandet angeordnet sind, welche oberhalb des PV-Moduls verlaufen. Damit wird eine Abschattung der aktiven Fläche durch oberhalb verlaufende Riegel vermieden. Dagegen besteht für Module, die oberhalb eines horizontal verlaufenden Riegels angeordnet sind, keine Gefahr einer Abschattung durch diesen unterhalb des Moduls verlaufenden Riegel, da das direkt einfallende Sonnenlicht von schräg oben auf die aktive Fläche trifft. Im Ergebnis kann somit erfindungsgemäß die aktive Fläche eines PV-Moduls oberhalb eines horizontal verlaufenden Riegels nahe an diesen heranrücken, um den Platzbedarf der PV-Anlage in vertikaler Richtung zu minimieren.

Soll die PV-Anlage in besonders windanfälligen Orten aufgestellt werden, so kann erfindungsgemäß vorgesehen sein, dass die PV-Module um eine Drehachse schwenkbar an der Tragkonstruktion aufgehängt sind. Hierbei ist es vorteilhaft, wenn die Drehachse in etwa parallel zu den Riegeln verläuft, denn damit kann eine Schwenkbarkeit bei kompaktem Montagefeld gewährleistet werden. Eine Schwenkbarkeit der PV-Module um eine Drehachse kann beispielsweise erreicht werden, indem die PV-Module lediglich an oberen Riegeln der Tragkonstruktion schwenkbar aufgehängt sind. Aufgrund der Schwenkbarkeit können sich die PV-Module bei starken Winden aus der Ebene heraus bewegen, die durch die Pfosten gebildet ist. Durch die dadurch entstehenden Lücken in den Montagefeldern kann der Wind somit nahezu ungehindert hindurch wehen, wodurch die auf die Tragkonstruktion wirkende Windlast erheblich vermindert ist. Von Vorteil ist dabei, dass die Tragkonstruktion insgesamt weniger stabil ausgestaltet werden muss, sodass beispielsweise die Pfosten weniger steif ausgebildet und somit insgesamt Materialkosten eingespart werden können.

Um eine möglichst einfache Montage der PV-Anlage zu ermöglichen, sieht die Erfindung vor, dass an den Pfosten Halteflächen ausgebildet sind, an denen ein zugehöriger Riegel flächig befestigbar ist. Durch das flächige Anliegen eines Riegels an einer Haltefläche können von dem Riegel eingeleitete Kräfte und Momente effektiv von dem Pfosten aufgenommen werden.

Erfindungsgemäß können die Halteflächen besonders einfach als Flansche an einem Profil und/oder als Laschen an einer Öffnung, beispielsweise eingebracht in eine Außenfläche eines Profils, ausgebildet sein. Hierzu kann auch vorgesehen sein, dass Halteflächen auf einer Seite eines Pfostens als Flansche und auf der anderen Seite als Laschen ausgebildet sind. Laschen oder Flansche werden somit gemäß der Erfindung als Alternativen angesehen, wobei es erfindungsgemäß sowohl für Laschen als auch Flansche bevorzugt ist, wenn diese rechtwinklig von den Pfosten abstehen und/oder in Richtung einer Ebene, vorzugsweise seitlich versetzt zu dieser verlaufen, die durch die PV-Module gebildet wird. Ferner können auch Bohrungen, Langlöcher oder dergleichen an Laschen und/oder Flanschen vorgesehen sein, um die Befestigung der Riegel mittels Schrauben oder dergleichen zu erleichtern.

Ein als Haltefläche dienender Flansch kann erfindungsgemäß insbesondere entlang eines gesamten Halteabschnitts eines Pfostens verlaufen; der Flansch kann somit Teil eines Profils sein; er kann aber auch nachträglich an einen Pfosten angefügt worden sein, beispielsweise durch Anschweißen. Bei Verwendung von Profilen, die nur einfache Flansche an ihren Enden aufweisen, beispielsweise einem S-Profil, können erfindungsgemäß zusätzliche, an ein Profil anschraubbare Winkelverbinder vorgesehen sein. Damit lässt sich bei Befestigung eines Riegels an einem einfachen Flansch in Verbindung mit einem Winkelverbinder, ein geschlossener, umlaufender Kraftfluss bilden und somit die Steifigkeit der Konstruktion erhöhen. Daneben können Flansche an Pfosten erfindungsgemäß auch lediglich dazu vorgesehen sein, die Biegesteifigkeit der Pfosten zu erhöhen.

Die Form einer Lasche kann erfindungsgemäß durch die Form der zugehörigen Öffnung in einem Profil vorgegeben sein, beispielsweise indem die Öffnungen und zugehörigen Laschen durch Prozesse wie Stanzen oder Laserschneiden in Verbindung mit Biegen oder Formen kostengünstig an den Pfosten erzeugt werden. Hierbei kann aus einer Öffnung auch ein Laschenpaar gebildet sein, welches beidseitig der Öffnung angeordnet ist, um ein beidseitiges Fassen eines Riegels zu ermöglichen.

Die Robustheit und Steifigkeit der Tragkonstruktion lässt sich erfindungsgemäß weiter steigern, wenn die Halteflächen paarweise ausgebildet sind. Denn ein Paar aus Halteflächen kann einen zwischen diesen Halteflächen eingeschobenen Riegel beidseitig fassen, und somit das Ableiten von Kräften weiter verbessern. Um ein beidseitiges Umfassen eines Riegels durch Halteflächen zu erleichtern, ist es zudem vorteilhaft, wenn die Riegel schmaler als die Pfosten, insbesondere schmaler als ein Abstand zwischen paarweise ausgebildeten Halteflächen, ausgebildet sind.

Alternativ oder ergänzend kann auch vorgesehen sein, Riegel mittels Winkelverbindern an den Pfosten zu befestigen. Hierbei sind erfindungsgemäß solche Winkelverbinder bevorzugt, die zu beiden Seiten eines zu befestigenden Riegels Halteflächen aufweisen, die flächig mit einem Pfosten verbindbar sind.

Eine weitere mögliche Ausgestaltung der Erfindung sieht vor, dass an den Pfosten Durchstecköffnungen ausgebildet sind, um jeweils einen Riegel oder dessen Ende aufzunehmen. Die Ausbildung von Durchstecköffnungen hat den Vorteil, dass Verkippungen der Pfosten gegeneinander und damit verbundene Schwankungen der Abstände zwischen den Pfosten leicht ausgeglichen werden können, indem die Riegel mehr oder weniger tief in die Durchstecköffnungen gesteckt werden.

Es versteht sich, dass es für eine einfache Montage hierbei vorteilhaft ist, wenn die Durchstecköffnung etwas größer als der von ihr aufzunehmende Riegel ausgestaltet ist.

Erfindungsgemäß kann jedoch insbesondere vorgesehen sein, dass die Durchstecköffnung in vertikaler Richtung mindestens das 1.25-fache, bevorzugt mindestens das 1.5-fache der Höhe eines Riegels aufweist. Damit wird eine Möglichkeit geschaffen, unterschiedliche Höhenlagen der Pfosten, beispielsweise in welligem Gelände, zumindest teilweise auszugleichen, indem die Riegel in verschiedenen Höhen montiert werden.

Im Gegensatz zu seitlich an Außenflächen der Pfosten mittels befestigter Winkelverbinder gebildeter Durchsteckkanäle bieten Durchstecköffnungen zudem den Vorteil, dass diese erfindungsgemäß mittig in Bezug auf den Pfosten angeordnet werden können. Damit lässt sich besonders einfach erreichen, dass die PV-Module in Bezug auf Pfosten und/oder Riegel mittig platziert sind. Eine solche Anordnung ist erfindungsgemäß wegen minimierter Abschattung auf beiden Seiten eines PV-Moduls bevorzugt.

Bei Verwendung von Durchstecköffnungen ist es besonders vorteilhaft, wenn zumindest der Halteabschnitt des Pfostens in Form eines Omega-Profils ausgebildet ist. Denn bei Verwendung eines Omega-Profils können zwei horizontal benachbarte Riegel von den beiden offenen Enden des Omega-Profils, die durch ein entlang des Profils verlaufendes paralleles Flanschpaar gebildet sein können, beidseitig gefasst sein. Dadurch kann ein geschlossener Kraftfluss in dem Omega-Profil ausgebildet werden. Hierbei können einzelne Riegel durch in Seitenflächen des Omega-Profils ausgebildete Durchstecköffnungen geführt sein. Bei dieser Ausgestaltung können somit links und rechts eines als Omega-Profil ausgestalteten Pfostens verlaufende Riegel an einem auf einer Seite des Pfostens verlaufenden Flanschpaar befestigt sein. Damit ist eine besonders einfach zu montierende und dennoch robuste Ausgestaltung der Tragkonstruktion benannt.

Eine ähnlich robuste Verbindung zwischen Pfosten und Riegel unter Verwendung von Durchstecköffnungen lässt sich erfindungsgemäß erreichen, wenn zumindest der Halteabschnitt des Pfostens in Form eines C- oder U-Profils ausgebildet ist. In diesem Fall können an Seitenflächen des jeweiligen Profils Durchstecköffnungen ausgebildet sein, die aufgebogene Laschen aufweisen, die ihrerseits Halteflächen zur Montage von Riegeln bereitstellen.

Sollen zwei links und rechts eines Pfostens verlaufende Riegel an einer Lasche montiert werden, ist es vorteilhaft, wenn die Höhe der Lasche mehr als das 1.25-fache der Höhe eines Riegels aufweist, bevorzugt mindestens 1.5-mal die Höhe eines Riegels aufweist. Durch diese Ausgestaltung ist eine Lasche, beziehungsweise ein Laschenpaar, einer Durchstecköffnung somit hoch genug, um zwei Riegel zu halten. Eine zusätzlich höher ausgestaltete Durchstecköffnung kann dennoch gemäß der Erfindung nützlich sein, um einen verbesserten Ausgleich der Montagehöhe von Riegeln zu ermöglichen.

Bei einer Ausgestaltung der Erfindung können Durchstecköffnungen eine oder mehrere, wie bereits zuvor beschriebene Laschen aufweisen, die Halteflächen zur Montage eines Riegels, bevorzugt von zwei Riegeln, bereitstellen. Damit ergeben sich mannigfaltige Ausgestaltungen, auch in Verbindung mit Omega-Profilen. Im Gegensatz zu separat zu befestigenden Winkelverbindern bieten Laschen den Vorteil eines geringeren Montageaufwands, da sie nicht wie Winkelverbinder an den Profilen befestigt werden müssen. Zudem sind aufgebogene Laschen in der Regel drehfest mit einer Vertikalfläche eines Profils verbunden, wodurch auf einfache Weise eine hohe Verwindungssteifigkeit der Tragkonstruktion erreicht wird.

Allgemein, insbesondere bei allen bisher beschriebenen Ausgestaltungen von Durchstecköffnungen, kann insbesondere vorgesehen sein, dass einzelne Durchstecköffnungen wenigstens zweimal, insbesondere wenigstens dreimal, die Höhe eines Riegels aufweisen. Durch diese Ausgestaltung kann ein Riegel oder insbesondere zwei Riegel, in einer Durchstecköffnung platziert sein, wobei, durch die größere Ausgestaltung der Durchstecköffnung, die Montagehöhe des Riegels, beziehungsweise der Riegel, in Bezug auf die Durchstecköffnung variabel sein kann, also insbesondere bei der Montage variiert werden kann. Dadurch lässt sich ein Höhenausgleich erreichen, was insbesondere bei welligem Aufstellgelände von Vorteil ist.

Alternativ zur Aufnahme von mindestens zwei Riegeln in einer Durchstecköffnung sieht eine weitere Ausgestaltung der Erfindung vor, dass in einer Durchstecköffnung nur ein Riegel platziert ist, während ein weiterer Riegel auf einer der Durchstecköffnung gegenüberliegenden Seite des Pfostens ohne Durchstecköffnung und mittels am Pfosten ausgebildeter Halteflächen montiert ist. Hierbei kann insbesondere vorgesehen sein, dass der durch die Durchstecköffnung geführte Riegel auf der der Durchstecköffnung gegenüberliegenden Seite des Pfostens an derselben Haltefläche wie der weitere Riegel montiert ist. Mit anderen Worten kann gemäß einer Ausgestaltung der Erfindung insbesondere vorgesehen sein, dass an einer Haltefläche ein durch eine Durchstecköffnung gesteckter Riegel und ein weiterer Riegel befestigt sind.

Eine weitere erfindungsgemäße Ausgestaltung sieht vor, dass die Pfosten zumindest in dem oder einem Halteabschnitt ein Profil mit einer C-förmigen oder U-förmigen Grundform aufweisen. Hierbei können an den Enden des Profils zusätzliche Halteflächen als Flansche ausgebildet sein. Die Flansche können entweder während der Herstellung des Profils ausgebildet oder nachträglich an dem Profil befestigt worden sein.

Gemäß einer wieder anderen erfindungsgemäßen Ausgestaltung kann vorgesehen sein, dass die Pfosten zumindest in dem oder einem Halteabschnitt ein Profil mit einer Z-förmigen oder S-förmigen Grundform aufweisen, wobei an den Enden des Profils zusätzliche Halteflächen als Flansche ausgebildet sind. S-förmige Profile sind im Handel teilweise auch als "Z-plus"-Profile bekannt. "Zusätzliche Halteflächen/Flansche" ist hier, wie auch bereits zuvor bei den C- oder U-förmigen Profilen, so zu verstehen, dass die Grundform der Profile bereits ohne die Flansche gegeben ist, auch wenn diese bereits beim Herstellen des Profils erzeugt werden.

Für eine besonders einfache und dennoch robuste Montage der PV-Module ist es erfindungsgemäß bevorzugt, wenn die PV-Module an den Riegeln befestigt sind. Werden Module im Querformat/Hochformat montiert, erfolgt demnach die Halterung der Module entlang deren längeren/kürzeren Seiten. Hierzu können erfindungsgemäß spezielle Halteelemente vorgesehen sein. Vorzugsweise stellen diese Halteelemente Nutabschnitte bereit, in die ein Rand des jeweiligen PV-Moduls eingesteckt oder einsteckbar ist, vorzugsweise unter Verzicht auf eine kraftschlüssige Verbindung. Hierbei können die Nutabschnitte mit einem plastischen oder elastischen Material, vorzugsweise EPDM, ausgekleidet sein, um die PV-Module vor Beschädigungen zu schützen. Ferner kann ergänzend vorgesehen sein, die PV-Module mit den Halteelementen zu verkleben, um ein Verrutschen der PV-Module in den Nutabschnitten zu unterbinden.

Die Halteelemente können erfindungsgemäß beispielsweise als kaltgeformte Stahlteile, vorzugsweise aus korrosionsbeständigem Stahl und/oder mit Korrosionsschutz, gefertigt sein oder aus Kunststoff oder aus Leichtmetallen wie Aluminium und insbesondere einen Belag aus Gummi aufweisen. Die Halteelemente können ferner in Form von Profilen oder als Spritz- oder Druckgussteile hergestellt sein.

Erfindungsgemäß sind die PV-Module im Bereich der Nutabschnitte bevorzugt beidseitig von dem jeweiligen Halteelement gefasst, sodass eine sichere Halterung der PV-Module gewährleistbar ist.

Es versteht sich, dass Halteelemente wie zuvor beschrieben in analoger Anwendung der Erfindung auch zur Befestigung von PV-Modulen an den Pfosten eingesetzt werden können.

Besonders bevorzugt sind an den Halteelementen jeweils zwei gegenüberliegende Nutabschnitte ausgebildet. Somit kann ein einzelnes Halteelement zwei sich gegenüber liegende PV-Module halten. Hierbei ist es vorteilhaft, wenn die zwei Nutabschnitte in einer gemeinsamen Ebene verlaufen. Ergänzend oder alternativ kann auch vorgesehen sein, dass die zwei Nutabschnitte jeweils mittig in Bezug auf seitliche Außenflächen des Halteelements angeordnet sind. Durch derartige Ausgestaltungen wird eine, erfindungsgemäß bevorzugte, mittige Positionierung für alle PV-Elemente in Bezug auf Pfosten und/oder Riegel wesentlich erleichtert.

Ferner kann auch vorgesehen sein, dass die Halteelemente jeweils eine, vorzugsweise rechtwinklige, Querschnittsverjüngung aufweisen. An der Stelle, an der sich der Querschnitt ändert, kann somit ein Anschlag an dem Halteelement ausgebildet sein. Damit kann das Halteelement in eine an einem Riegel ausgebildete Öffnung bis zu einer definierten Einstecktiefe einsteckbar oder eingesteckt sein. Hierzu kann demnach erfindungsgemäß vorgesehen sein, dass die Riegel, insbesondere mittig angeordnete, zu den Halteelementen korrespondierende Durchstecköffnungen aufweisen. Diese Durchstecköffnungen an den Riegeln können insbesondere derart ausgebildet sein, dass ein Verrutschen der Halteelemente in Längsrichtung des Riegels ausgeschlossen ist.

Ein wesentlicher Vorteil dieser Ausgestaltung besteht darin, dass es für eine robuste Positionierung der PV-Module ausreichend ist, das Halteelement im Bereich einer oberen Nut an dem das Halteelement aufnehmenden Riegel zu befestigen, beispielsweise mittels einer Verschraubung; eine zusätzliche Befestigung im Bereich der zweiten, unteren Nut ist somit entbehrlich. Damit wird nicht nur Montageaufwand gespart, sondern die Halteelemente können in einem jeweiligen unteren Bereich, der eine untere Haltenut umgibt, schmaler als in einem oberen Bereich ausgebildet werden, was vorteilhaft ist, um Verschattungen der PV-Module zu vermeiden.

Für ein positionssicheres und verkippungsfreies Montieren der Halteelemente ist es zudem erfindungsgemäß vorteilhaft, wenn an dem Halteelement eine Anlagefläche ausgebildet ist mit der das Halteelement flächig an dem Riegel anliegt.

Eine weitere Optimierung der Halteelemente gemäß der Erfindung sieht vor, dass diese an einer Unterseite eine Abschrägung aufweisen, sodass eine Abschattung eines PV-Moduls vermieden werden kann, das in eine untere Nut des Halteelements eingesetzt ist.

Als alternative oder ergänzende Ausgestaltung zu separaten Halteelementen kann erfindungsgemäß vorgesehen sein, dass an den Riegeln Nutabschnitte ausgebildet werden, in die ein jeweiliges PV-Modul einsteckbar ist. Diese Nuten können beispielsweise auch nur an einer Oberseite eines Riegels ausgebildet sein und/oder sich insbesondere über die gesamte Länge eines Riegels erstrecken. Von Vorteil ist dabei, dass die PV-Module bei der Montage direkt in die Nuten der Riegel eingesetzt werden können, sodass die Anzahl an zu montierenden Halteelementen verringert werden kann. Diese Vorgehensweise kann den Montageaufwand senken und damit Kosten sparen.

Analog zu den Halteelementen kann auch für Riegel vorgesehen sein, dass Riegel an einer Unterseite eine Abschrägung aufweisen. Damit können auch noch für Randbereiche der aktiven Fläche des PV-Moduls jeweils große Einfallswinkel ohne Abschattung durch den jeweiligen Riegel gewährleistet werden.

Die Erfindung hat darüber hinaus erkannt, dass es vorteilhaft sein kann, die Tragkonstruktion so auszulegen, dass eine, insbesondere landwirtschaftliche, Bewirtschaftung der Fläche, auf der die PV-Anlage aufzustellen ist, insbesondere von Bewirtschaftungsfreiräumen zwischen einzelnen Reihen, weiterhin möglich bleibt. Hierzu sieht die Erfindung vor, dass zwischen dem Erdreich und einem untersten Riegel der Tragkonstruktion ein Freiraum freigehalten ist. Dieser Freiraum kann erfindungsgemäß wenigstens 50 cm, bevorzugt wenigstens 60 cm, besonders bevorzugt wenigstens 1 m Höhe aufweisen. Es versteht sich, dass der Freiraum somit lediglich durch die notwendigen Pfosten unterbrochen wird.

Bei Aufstellung der PV-Module in Reihen kann hierbei insbesondere vorgesehen sein, dass die Reihen der PV-Anlage derart beabstandet angeordnet sind, dass zwischen den Reihen ein Bewirtschaftungsfreiraum mit einer Breite von wenigstens 6 Metern, wenigstens 8 Metern oder wenigstens 10 Metern besteht.

Für eine möglichst effiziente Flächenausnutzung, also insbesondere für eine maximale Energieerzeugung pro Fläche, kann es erfindungsgemäß vorteilhaft sein, wenn die PV-Module mit der Tragkonstruktion im Wesentlichen eine Ebene bilden. Entsprechend können dafür die Pfosten entlang einer im Wesentlichen geraden Linie aufgestellt sein. Ab einer gewissen Mindestbreite der Aufstellfläche können die PV-Module auch in mehreren Reihen angeordnet sein. Hierbei ist es vorteilhaft, wenn diese Reihen, vorzugsweise gleichmäßig, voneinander beabstandet angeordnet sind. Denn erfindungsgemäß kann je nach Höhe einer Reihe der PV-Anlage ein Mindestabstand zu einer in Sonnenrichtung benachbarten Reihe derart gewählt sein, dass eine Abschattung der aktiven Flächen der PV-Module durch die benachbarte Reihe weitgehend ausgeschlossen ist. Hierbei können auch Reihen mit unterschiedlichen Höhen, also beispielsweise mit einer unterschiedlichen Anzahl an übereinander angeordneten PV-Modulen, vorgesehen sein.

Bei einer besonders vorteilhaften Ausgestaltung der Erfindung kann vorgesehen sein, dass die PV-Module im Wesentlichen in Nord-Süd-Richtung ausgerichtet sind. Bei einer Nord-Süd-Ausrichtung sind die Flächennormalen der beiden aktiven Seiten eines bifazialen PV-Moduls jeweils nach Osten und Westen ausgerichtet. Hierbei können erfindungsgemäß Winkelabweichungen von +/-30° vorgesehen sein, weshalb die Ausrichtung als "im Wesentlichen" in Nord-Süd-Richtung verlaufend beschrieben wird. Durch derartige Ausgestaltungen kann mit der PV-Anlage eine wie eingangs beschriebene Strom-Tageskurven-Charakteristik erzielt werden, die um die Mittagszeit gerade keine Spitzenleistung aufweist. Erfindungsgemäße PV-Anlagen können jedoch in einer Vielzahl an weiteren Orientierungen in Bezug auf die Himmelsrichtung in vorteilhafter Weise eingesetzt werden.

Gemäß der Erfindung kann die Flächenausnutzung der PV-Anlage mit noch hinnehmbaren Einbußen in der Effizienz der Energiewandlung optimiert werden, wenn ein Abstand zwischen zwei Reihen wenigstens das Dreifache, bevorzugt wenigstens das Vierfache, besonders bevorzugt wenigstens das Fünffache einer maximalen Höhe einer aktiven Fläche der PV-Anlage beträgt. Damit lässt sich je nach geographischer Breite des Aufstellungsorts der PV-Anlage, eine Abschattung von PV-Modulen durch eine benachbarte Reihe weitgehend vermeiden, insbesondere am Morgen und am Abend. Die maximale Höhe einer aktiven Fläche der PV-Anlage kann beispielsweise durch einen vertikalen Abstand zwischen einem höchstgelegenen und einem niedrigstgelegenen Punkt, jeweils innerhalb der aktiven Flächen einer Reihe der PV-Anlage, definiert sein (vgl. hierzu auch die Figurenbeschreibung).

Verschattungen sind bekanntermaßen deshalb nachteilig, da die einzelnen Zellen eines PV-Moduls typischerweise in Reihe zu Zellstrings geschaltet sind und somit die am schwächsten belichtete Zelle den tatsächlich fließenden Strom begrenzt. Zwar sind im Stand der Technik sogenannte Bypass-Dioden bekannt, die standardmäßig in PV-Modulen mit vorgesehen sind, um die Auswirkungen von Teilabschattungen der aktiven Fläche eines PV-Moduls zu minimieren. Die ausschließliche Nutzung von Bypass-Dioden zur Minimierung der Effekte durch Abschattung ist aber mit erheblichen Nachteilen verbunden. Beispielsweise kommt es zu einer starken Wärmeentwicklung, sobald eine Bypass-Diode durchschaltet, um einen abgeschatteten Bereich einer aktiven Fläche elektrisch zu überbrücken. Gerade bei PV-Anlagen im Sinne der Erfindung bei denen täglich mit Abschattungen zu rechnen ist, ist eine solche Vorgehensweise jedoch nicht akzeptabel, da sich eine häufige Wärmeentwicklung negativ auf die Lebensdauer der PV-Module auswirken kann. Ein weiterer Nachteil besteht darin, dass viele am Markt verwendeten Wechselrichter trotz vorhandener Bypassdioden einen für das PV-Modul ungünstigen Arbeitspunkt einstellen, sodass weitere Leistungsverluste in den PV-Modulen auftreten, die an dem betroffenen Wechselrichter angeschlossen sind.

Eine erfindungsgemäße PV-Anlage, insbesondere wie zuvor beschrieben und/oder nach einem der auf eine Photovoltaik-Anlage gerichteten Ansprüche, kann insbesondere derart verwendet wird, dass die PV-Module während der Stromerzeugung in etwa in Nord-Süd-Richtung ausgerichtet werden. Hierbei können erfindungsgemäß Winkelabweichungen von +/-30° vorgesehen sein, weshalb die Ausrichtung als "in etwa" in Nord-Süd-Richtung verlaufend beschrieben wird. Bei einer Nord-Süd-Ausrichtung eines PV-Moduls sind die Flächennormalen der beiden aktiven Seiten eines bifazialen PV-Moduls jeweils nach Osten und Westen ausgerichtet. Durch diese spezifische Verwendung lässt sich mit einer erfindungsgemäßen PV-Anlage eine wie eingangs beschriebene Strom-Tageskurven-Charakteristik erzielen, die um die Mittagszeit gerade keine Spitzenleistung aufweist.

Die Erfindung wird nun anhand von Ausführungsbeispielen näher beschrieben, ist aber nicht auf diese Ausführungsbeispiele beschränkt.

Es zeigt:
- Figur 1: eine dimetrische Ansicht einer erfindungsgemäßen Photovoltaik-Anlage,
- Figur 2: eine Detailansicht einer Reihe aus Pfosten derselben PV-Anlage,
- Figur 3: einen mittels eines C-Profils ausgestalteten erfindungsgemäßen Pfosten mit zwei montierten Riegeln,
- Figur 4: einen mittels eines Omega-Profils ausgestalteten erfindungsgemäßen Pfosten mit zwei montierten Riegeln,
- Figur 5: einen erfindungsgemäßen Riegel mit zwei sich gegenüberliegenden Nutabschnitten zur Aufnahme von zwei PV-Modulen,
- Figur 6: einen Querschnitt durch ein erfindungsgemäßes Halteelement, das in einen durch ein U-Profil gebildeten Riegel eingelegt ist,
- Figur 7: eine perspektivische Ansicht des Halteelements aus Figur 6, eingelegt in den U-förmigen Riegel,
- Figur 8: eine Draufsicht auf einen Pfosten und zu diesem in erfindungsgemäßer Weise asymmetrisch in nördlicher beziehungsweise südlicher Richtung beabstandete PV-Module sowie deren aktive Flächen,
- Figur 9: eine seitliche Querschnittsansicht eines horizontal verlaufenden Riegels und zu diesem oberhalb und unterhalb angeordneten PV-Modulen und deren aktiven Flächen,
- Figur 10: eine Seitenansicht einer erfindungsgemäßen PV-Anlage mit zwei Reihen von Pfosten, die beabstandet aufgestellt sind,
- Figur 11: eine Querschnittsansicht einer erfindungsgemäßen Aufhängung von PV-Modulen an einer erfindungsgemäßen Tragkonstruktion einer PV-Anlage,
- Figur 12: eine Querschnittsansicht einer weiteren erfindungsgemäßen Aufhängung von PV-Modulen an einer erfindungsgemäßen Tragkonstruktion einer PV-Anlage.

Bei der nachfolgenden Beschreibung verschiedener Ausführungsformen der Erfindung erhalten in ihrer Funktion übereinstimmende Elemente auch bei abweichender Gestaltung oder Formgebung übereinstimmende Bezugszahlen.

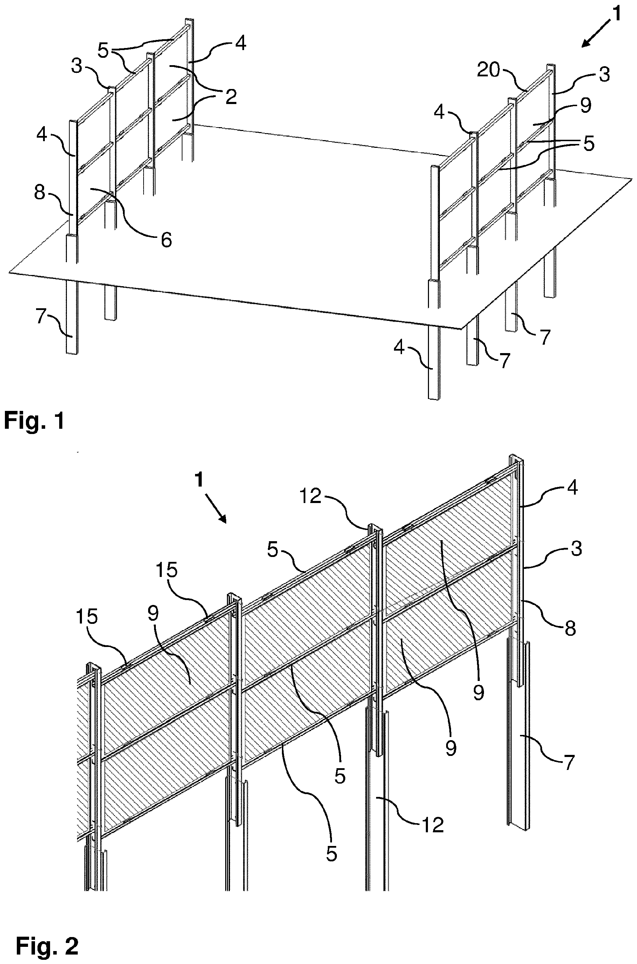

Die Figur 1 zeigt eine im Ganzen mit 1 bezeichnete Photovoltaik(PV)-Anlage mit mehreren bifazialen PV-Modulen 2, die aufrecht stehend an einer Tragkonstruktion 3 angeordnet sind. Die Tragkonstruktion 3 wird durch mehrere Pfosten 4 gebildet, die in einer Reihe aufgestellt sind. Genauer ist jeder Pfosten 4 in einen Befestigungsabschnitt 7 sowie einen damit verbundenen Halteabschnitt 8 aufgeteilt. Wie durch die horizontale Fläche, welche die Erdoberfläche illustriert, angedeutet wird, ist die Tragkonstruktion 3 mittels der Befestigungsabschnitte 7 im Erdreich verankert.

Wie die Figur 1 zeigt, verlaufen zwischen den Pfosten 4 mehrere Riegel 5 im Wesentlichen in horizontaler Richtung. Da die Pfosten 4 im Wesentlichen senkrecht stehend montiert sind, definieren somit jeweils zwei benachbarte Pfosten 4 und zwei benachbarte Riegel 5 ein im Wesentlichen rechteckiges Montagefeld 6. Bei dem in Figur 1 gezeigten Ausführungsbeispiel ist in jedem dieser rechteckigen Montagefelder 6 ein PV-Modul 2 angeordnet, und zwar senkrecht stehend. Durch die aufrechte Anordnung der PV-Module 2, die auf beiden Seiten aktive Flächen 9 aufweisen, wird es möglich, aus westlichen und östlichen Richtungen Sonnenlicht effizient einzufangen und mittels der PV-Anlage in elektrischen Strom zu wandeln.

Wie die detaillierte Ansicht der PV-Anlage 1 in Figur 2 zeigt, sind in vertikaler Richtung mehrere PV-Module 2, nämlich genau zwei, übereinander angeordnet. Daneben ist in Figur 2 gut zu erkennen, dass beispielsweise die obersten Riegel 5 in vertikaler Richtung versetzt zueinander angeordnet sind. Da die PV-Module 2 mittels Halteelementen 15 an den Riegeln 5 befestigt sind, kommt es dazu, dass horizontal benachbarte PV-Module 2 ebenfalls in vertikaler Richtung versetzt zueinander angeordnet sind. Diese Ausgestaltung ist erfindungsgemäß bevorzugt, da damit ein einfacher Ausgleich unterschiedlicher Geländeverläufe erreichbar ist.

Wie mit Blick auf Figur 2 gut zu erkennen ist, liegen die jeweils durch C-Profile gebildeten Befestigungsabschnitte 7 und die Halteabschnitte 8 Rücken an Rücken aneinander an und überlappen sich somit in einem Überlappungsbereich. Hierbei ist es erfindungsgemäß bevorzugt, wenn sich der Überlappungsbereich oberhalb des Erdreichs befindet, da dies die Montage des Halteabschnitts 8 an dem Befestigungsabschnitt 7 erleichtert und zudem der Befestigungsabschnitt 7 unabhängig von dem Halteabschnitt 8 im Erdreich verankert werden kann, z.B. durch Einrammen.

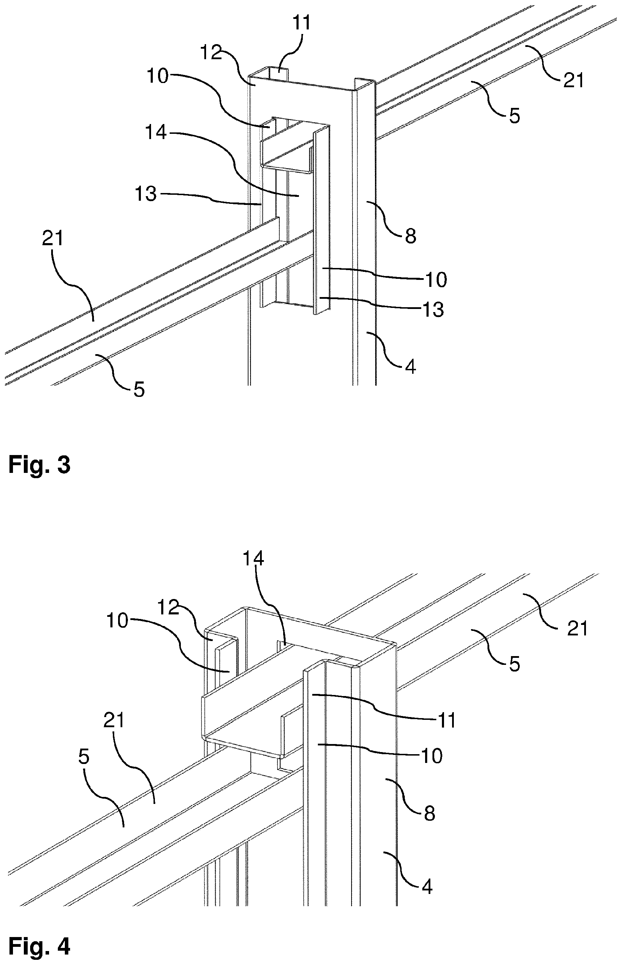

Die Figur 3 zeigt eine erfindungsgemäße Ausgestaltung einer Verbindung eines Pfostens 4, genauer dessen oberen Halteabschnitts 8, mit zwei horizontal verlaufenden Riegeln 5. Während die Riegel 5 jeweils durch ein U-Profil 21 gebildet sind, ist der Halteabschnitt 8 des Pfostens 4 durch ein C-förmiges Profil 12 gebildet.

Zur Befestigung der beiden Riegel 5 ist an dem Pfosten 4 in Figur 3 eine als Durchstecköffnung ausgebildete Öffnung 14 vorgesehen, durch die die Riegel 5 durchgeführt bzw. eingesteckt sind. Die Öffnung 14 selbst ist durch eine Stanzung an dem C-Profil 12 des Pfostens 4 erzeugt worden. Durch einen Stanzvorgang können auf relativ einfache Weise die beiden in Figur 3 dargestellten Laschen 13 erzeugt werden, die gemäß der Erfindung als Halteflächen 10 dienen. Beispielsweise lassen sich die beiden Riegel 5 mittels Schrauben mit selbstschneidendem Gewinde und entsprechend durchgeführten Bohrungen sehr einfach und in variabler Höhe an den beiden Laschen 13 befestigen.

Die Figur 4 zeigt eine hierzu als alternativ vorgesehene Ausbildung von erfindungsgemäßen Halteflächen 10. Hierzu ist der Pfosten 4, genauer sein oberer Halteabschnitt 8, mittels eines Omega-Profils 12 ausgestaltet. An seinen beiden freien Enden weist das Omega-Profil 12 zwei Flansche 11 auf, die, anders als die Laschen 13 in Figur 3, entlang der gesamten Länge des Omega-Profils 12 verlaufen und in vorteilhafter Weise als erfindungsgemäße Halteflächen 10 genutzt werden können. So ist der linke Riegel 5 lediglich in das Omega-Profil 12 eingesteckt, während der rechte Riegel 5 durch eine Durchstecköffnung 14 geführt ist, die in einer Seitenfläche des Pfostens 4 ausgebildet ist. Wie gut zu erkennen ist, können beide Riegel 5 übereinanderliegend an den paarweise ausgebildeten Halteflächen 10 des Omega-Profils 12 befestigt werden. Durch die paarweise Ausgestaltung der Halteflächen 10, jeweils zu beiden Seitenflächen eines Riegels 5, kann eine besonders stabile Verbindung und damit eine besonders stabile Tragkonstruktion 3 erreicht werden. Wie Figur 4 zeigt, fassen die paarweise ausgestalteten Halteflächen 10 die Riegel 5 jeweils beidseitig.

Sowohl aus Figur 3 als auch aus Figur 4 erschließt sich der Vorteil einer weiteren erfindungsgemäßen Ausgestaltung, welche vorsieht, dass die Riegel 5 schmaler als die Pfosten 4 ausgebildet sind. Denn durch diese Ausgestaltung wird es sehr erleichtert, dass Riegel 5 durch Durchstecköffnungen 14 der Pfosten 4 geführt werden können und gleichzeitig von an den Pfosten 4 ausgebildeten Halteflächen 10 beidseitig, also insbesondere von außen wie in Figur 4, gefasst sind.

Erfindungsgemäß können in einer Durchstecköffnung 14 entweder zwei Riegel platziert sein, wie dies in Figur 3 illustriert ist, oder aber nur ein Riegel, wie das Ausführungsbeispiel der Figur 4 zeigt. Wie Figur 4 zeigt, kann somit ein weiterer, zu einem ersten in einer Durchstecköffnung 14 platzierten Riegel 5 benachbarter Riegel 5 auf einer der Durchstecköffnung 14 gegenüberliegenden Seite des Pfostens 4 montiert sein, und zwar ohne Verwendung einer Durchstecköffnung 14, nämlich mittels am Pfosten ausgebildeter Halteflächen 10, die in Figur 4 durch die Flansche 11 gebildet sind. Eine solche Ausgestaltung ist beispielsweise sehr nützlich, um unterschiedliche Höhen in unebenem Gelände auszugleichen.

Beispielsweise das in Figur 3 gezeigte Ausführungsbeispiel kann wahlweise so interpretiert werden, dass der Pfosten 4, zumindest sein Halteabschnitt 8, durch ein Profil 12 mit einer C-förmigen oder U-förmigen Grundform gebildet ist, wobei im Falle der U-Form die freien Enden des Profils 12 als Flansche 11 anzusehen wären. Bevorzugt sind jedoch Flansche 11, die als Halteflächen 10 dienen sollen, erfindungsgemäß wie in Figur 4 ausgebildet, d.h. die Flansche 11 verlaufen bevorzugt in Richtung der Riegel 5. Denn diese Ausgestaltung ermöglicht ein flächiges Anliegen der Riegel 5. Das in Figur 4 gezeigte Omega-Profil 12 des Pfostens 4 wiederum kann auch aufgefasst werden als ein Profil 12 mit einer C-förmigen Grundform, wobei an den Enden dieses Profils 12 die dargestellten Halteflächen 10 als Flansche 11 ausgebildet sind.

Wie bereits in der Figur 2 angedeutet, werden die PV-Module 2 erfindungsgemäß bevorzugt an den Riegeln 5 befestigt, wobei hierzu die in Figur 2 gezeigten Halteelemente 15 vorgesehen sein können.

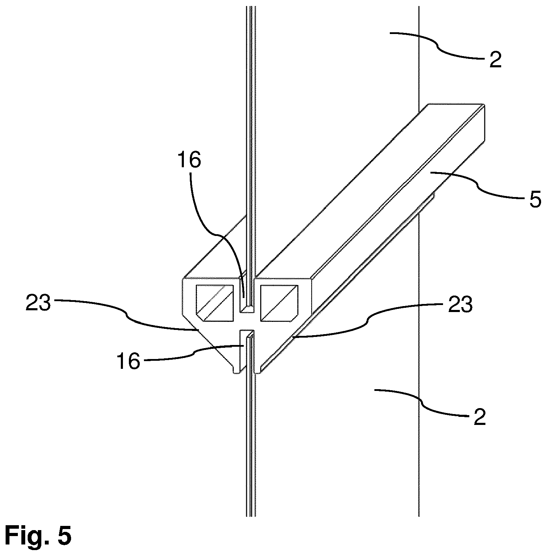

Die Figur 5 zeigt eine hierzu alternative erfindungsgemäße Ausgestaltung, bei der an den Riegeln 5 Nutabschnitte 16 zur Aufnahme und zum Halten der PV-Module 2 vorgesehen sind. Wie in Figur 5 gezeigt, ist es generell erfindungsgemäß bevorzugt, wenn sich Nutabschnitte 16 gegenüberliegen und/oder in einer gemeinsamen Ebene liegen. Denn durch diese Ausgestaltung können die PV-Module 2 mittig in Bezug auf die Tragkonstruktion 3 ausgerichtet werden. Gut zu erkennen in Figur 5 sind auch die erfindungsgemäßen Abschrägungen 24 an der Unterseite des Riegels 5. Diese Abschrägungen 24 minimieren die Abschattung des unteren PV-Moduls 2 durch den Riegel 5.

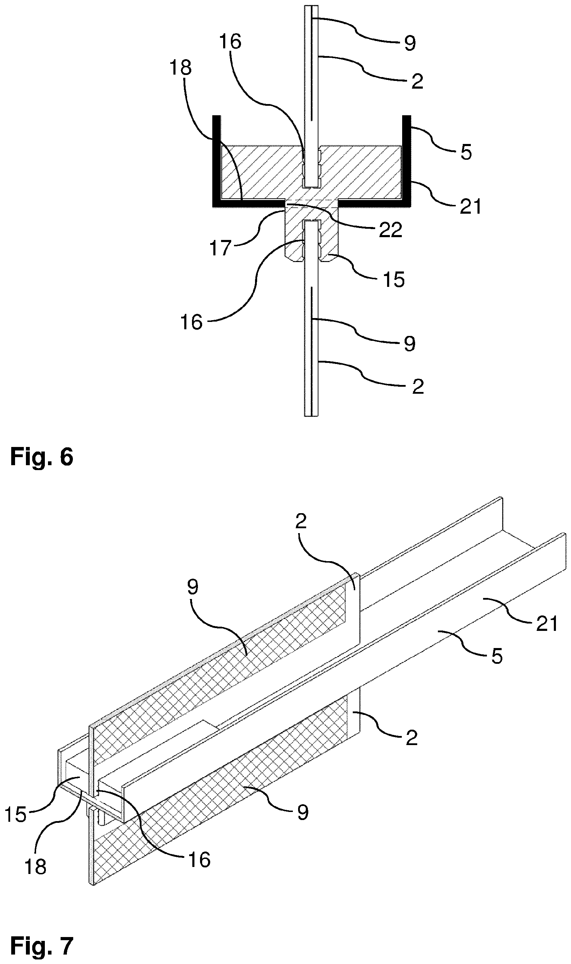

Figur 6 zeigt eine detaillierte Querschnittsansicht durch ein erfindungsgemäßes Halteelement 15. Das Halteelement 15 ist in eine Durchstecköffnung 22 eingesteckt, die an einer Unterseite des Riegels 5 ausgebildet ist, der durch ein U-förmiges Profil 21 gebildet ist. Hierbei ist an dem Halteelement 15 eine Anlagefläche 18 ausgebildet, mit der das Halteelement 15 flächig an der Innenseite des Riegels 5 anliegt. Durch die Querschnittsverjüngung 17, die in Höhe der Anlagefläche 18 ausgebildet ist, wird erreicht, dass das Halteelement 15 bis zu einer definierten Einstecktiefe in die Durchstecköffnung 22 einführbar ist. Damit wird unter anderem erreicht, dass die aktiven Flächen 9 der beiden PV-Module 2 in definiertem Abstand zu dem Riegel 5 montiert werden können, sodass insbesondere Abschattungen effizient vermieden werden können. Wie gut in Figur 6 zu erkennen ist, sind die PV-Module 2 mit ihren Rändern jeweils in die beiden sich gegenüberliegenden Nutabschnitte 16 des Halteelements 15 eingesteckt. Dabei ist die Einstecktiefe gerade so gewählt, dass die aktiven Flächen 9 der PV-Module 2 durch das Halteelement 15 und/oder den Riegel 5 bis zu einem bestimmten Einfallswinkel nicht abgedeckt oder beschattet werden.

Die soeben erläuterten erfindungsgemäßen Merkmale der Halteelemente 15 sind auch nochmals anschaulich in der perspektivischen Ansicht der Figur 7 illustriert. Insbesondere wird aus Figur 7 ersichtlich, dass die Halteelemente 15 die PV-Module 2 bevorzugt beidseitig fassen, um eine sichere Halterung zu gewährleisten. Hierzu ist es bereits ausreichend, wenn die Halteelemente 15 die PV-Module nur entlang eines bestimmten Randabschnitts beidseitig fassen, wie in Figur 7 dargestellt.

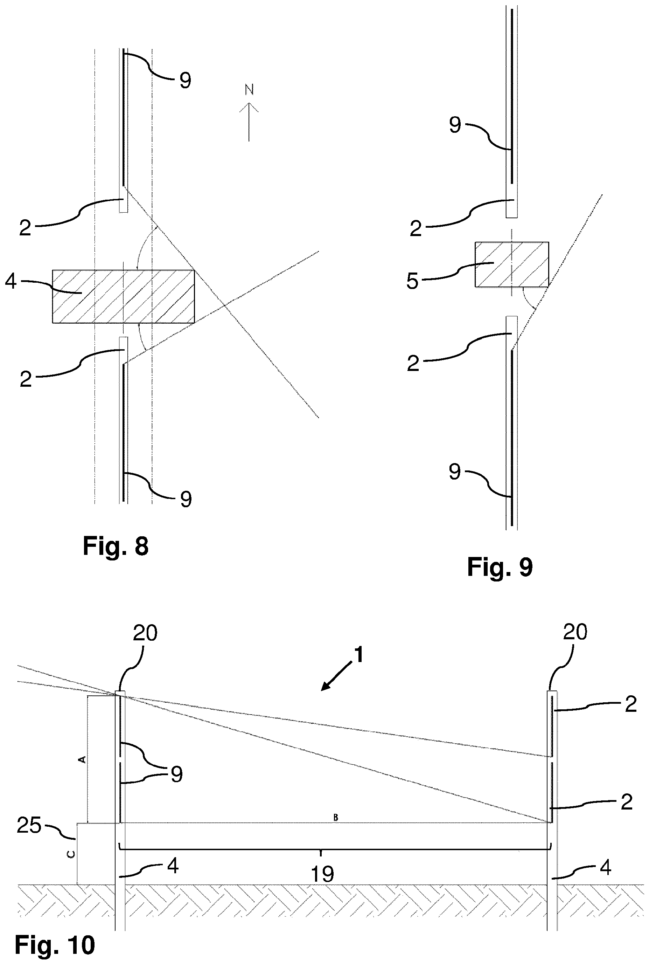

Die Figuren 8 und 9 illustrieren einen weiteren zentralen Aspekt der vorliegenden Erfindung, nämlich die aktiven Flächen 9 der PV-Module 2 von den Pfosten 4 und/oder Riegeln 5 beabstandet anzuordnen. Wie die Draufsicht auf den Pfosten 4 in Figur 8 zeigt, sind die aktiven Flächen 9 der beiden links und rechts des Pfostens 4 angeordneten PV-Module 2 so von dem Pfosten 4 beabstandet, das Sonnenlicht bis zu einem gewissen Einfallswinkel auf die aktive Fläche 9 gelangen kann, ohne dabei von dem Pfosten 4 abgeschattet zu werden. Der Einfallswinkel entspricht in Figur 8 gerade dem Winkel den die beiden dargestellten Sonnenstrahlen jeweils mit dem Lot (horizontal verlaufend in Figur 8) der betreffenden aktiven Fläche 9 einschließen.

Betrachtet man die beiden sich gegenüberliegenden Seiten der beiden PV-Module 2 genauer, so fällt auf, dass die aktiven Flächen 9 links und rechts des Pfostens nicht denselben Abstand zu dem Pfosten 4 aufweisen. Vielmehr sind sie asymmetrisch beabstandet zu diesem angeordnet. Durch den etwas größeren Abstand der aktiven Fläche 9 des in Figur 8 oben angeordneten PV-Moduls 2 wird erreicht, dass für Sonnenlicht aus südlichen Richtungen eine Abschattung der aktiven Fläche 9 für größere Einfallswinkel ausgeschlossen ist als dies für das in Figur 8 unten angeordnete PV-Modul 2 für Sonnenlicht aus nördlichen Richtungen der Fall ist. Mit anderen Worten wird am südlichen Rand eines PV-Moduls 2 der Abstand zwischen dem PV-Modul 2, genauer seiner aktiven Fläche 9, und dem Pfosten 4 etwas größer gewählt als an seinem nördlichen Rand, wie dies die beiden PV-Module 2 in Figur 8 illustrieren.

Die Figur 9 dagegen zeigt, wie durch eine erfindungsgemäße Beabstandung der aktiven Flächen 9 der beiden dargestellten PV-Module 2 zu dem quer verlaufende Riegel 5 eine Abschattung der aktiven Flächen 9 verhindert werden kann. Da die Figur 9 einen Querschnitt durch einen horizontal verlaufenden Riegel 5 darstellt, fällt der dargestellte Sonnenstrahl von schräg oben sowie in der Regel seitlich auf das untere PV-Modul 2 ein. Durch die Beabstandung der aktiven Fläche 9 des unteren PV-Moduls 2 von dem Riegel 5 wird somit, wie in Figur 9 dargestellt, ein maximaler Einfallswinkel definiert, bis zu welchem Sonnenlicht abschattungsfrei auf die aktive Fläche 9 auftreffen kann. In der Figur 9 entspräche dieser Einfallswinkel gerade dem Winkel, den der mittels seiner Projektion auf die vertikal verlaufende Schnittebene der Figur 9 dargestellte einfallende Sonnenstrahl mit dem Lot auf die aktive Fläche 9 (waagerecht verlaufend in Figur 9) einschließt. Es versteht sich demnach, dass der tatsächliche Einfallswinkel zwischen Sonnenstrahl und Einfallslot in der Regel größer sein kann als der Winkel, den die (in Figur 9 illustrierte) Projektion dieses Strahls in der Schnittebene mit dem Einfallslot einschließt.

Für den seltenen Fall, dass bei den in Figur 9 gezeigten PV-Modulen das Einfallslot der aktiven Flächen gerade in Richtung der Sonne zeigte, entspräche der in Figur 9 durch den Sonnenstrahl illustrierte Einfallswinkel dem Sonnenstand, also der Höhe der Sonne über dem Horizont gemessen in Grad. In der Regel wird das Sonnenlicht jedoch schräg von der Seite auf die PV-Module einstrahlen, sodass Sonnenstand und Einfallswinkel voneinander abweichen. Auch die beiden in Figur 8 dargestellten Sonnenstrahlen fallen schräg von der Seite auf die PV-Module 2 ein, wobei auch hier jeweils Projektionen dieser Strahlen in die horizontal verlaufende Schnittebene der Figur 8 dargestellt sind.

Auch bei dem in Figur 9 dargestellten Ausführungsbeispiel könnte erfindungsgemäß eine asymmetrische Beabstandung der PV-Module von dem Riegel 5 vorgesehen sein. Beispielsweise wäre es gemäß der Erfindung vorteilhaft, das obere PV-Modul 2, genauer dessen aktive Fläche 9, näher an den Riegel 5 heranzurücken. Damit würde einerseits die maximale Bauhöhe der Tragkonstruktion 3 und damit die wirkende Windlast reduziert; andererseits kann eine Abschattung der oberen aktiven Fläche 9 durch den darunterliegenden Riegel 5 ausgeschlossen werden, da das Sonnenlicht stets von schräg oben auf die PV-Module 2 einfällt. Gemäß der Erfindung könnte das obere PV-Modul 2 also nahe an den Riegel 5 heranrücken, bis die aktive Fläche 9 gerade noch nicht durch den Riegel 5 abgedeckt ist.

Die Figur 10 schließlich erläutert weitere erfindungsgemäße Ausgestaltungen der Photovoltaik-Anlage 1, insbesondere die erfindungsgemäße Beabstandung der Reihen 20 der PV-Anlage 1. Wie bereits in den Figuren 1 und 2 illustriert, können die PV-Module 2 erfindungsgemäß mit der Tragkonstruktion 3 im Wesentlichen eine Ebene bilden. Zur effizienten Flächenausnutzung werden erfindungsgemäß die PV-Module 2, wie in Figur 10 gezeigt, in voneinander beabstandeten Reihen 20 angeordnet. Auch die PV-Module 2 einer Reihe 20 bilden somit im Wesentlichen eine Ebene, wobei diese Ebene insbesondere in Nord-Südrichtung ausgerichtet sein kann, wie dies in Figur 10 der Fall ist. Somit kann bei einem beispielsweise aus westlicher Richtung einfallenden Sonnenstrahl (von links kommend in Figur 10) die in Figur 10 gezeigte Situation auftreten, dass also ein Teilbereich einer Reihe 20 (hier die unteren PV-Module der rechten Reihe 20) durch eine benachbarte Reihe 20 (hier die linke Reihe 20) abgeschattet ist.

Wie durch die beiden Sonnenstrahlen in Figur 10 angedeutet, nimmt dabei die Abschattung zu, je niedriger der Sonnenstand ist. Daher ist eine wie in Figur 10 gezeigte Ausgestaltung bevorzugt, bei der der mit B bezeichnete Abstand zwischen den beiden Reihen 20 mehr als das Dreifache der maximalen Höhe einer aktiven Fläche 9 der PV-Anlage 1 beträgt. Diese maximale Höhe entspricht in Figur 10 gerade dem vertikalen Abstand A, der den Abstand zwischen einem höchstgelegenen und einem niedrigstgelegenen Punkt, jeweils innerhalb der aktiven Flächen 9 der linken Reihe 20, definiert. Durch den erfindungsgemäß groß gewählten horizontalen Abstand B zwischen den beiden Reihen 20 wird somit, wie der obere Sonnenstrahl in Figur 10 zeigt, gewährleistet, dass auch bei einem niedrigen Sonnenstand nur ein Teilbereich der rechten Reihe 20 abgeschattet wird, sodass zumindest die oberen aktiven Flächen 9 der rechten Reihe 20 in Figur 10 weiterhin zur Stromproduktion genutzt werden können.

Ein weiterer Vorteil der Beabstandung der Reihen 20 der PV-Anlage 1 besteht in dem Bewirtschaftungsfreiraum 19, der zwischen den Reihen entsteht, denn dieser lässt sich beispielsweise landwirtschaftlich nutzen. Die Erfindung sieht hierzu insbesondere vor, den in Figur 10 mit einer Breite B bezeichneten Bewirtschaftungsfreiraum 19 nutzbar zu machen, indem jeweils in jeder Reihe zwischen den Pfosten 4 und zwischen dem untersten Riegel 5 der Tragkonstruktion 3 und der Erdoberfläche ein Freiraum 25 freigehalten ist. Dadurch, dass die PV-Module 2 somit mindestens in einer Höhe C über dem Erdboden angeordnet sind (vgl. Figur 10), kann zum einen eine Beschädigung derselben durch Steinschlag bei einer landwirtschaftlichen Nutzung des Bewirtschaftungsfreiraums 19 vermieden werden. Zum anderen werden durch diese Ausgestaltung insbesondere die unteren aktiven Flächen 9 der PV-Anlage einer Abschattung durch Bewuchs oder Anpflanzungen im Bewirtschaftungsfreiraum 19 weitgehend entzogen. Der Freiraum 25 schafft somit die notwendigen Voraussetzungen zur landwirtschaftlichen Nutzung des Bewirtschaftungsfreiraums 19 ohne nennenswerte Einbußen bei der Stromproduktion.

Anhand der Figur 10 lassen sich auch die Vorteile einer erfindungsgemäßen Aufteilung der PV-Anlage in übereinander angeordnete elektrische Zeilen 21 verstehen. Denn dadurch, dass die untere Zeile 21 der rechten Reihe 20 in Figur 10 elektrisch von der oberen Zeile 21 der rechten Reihe 20 in Figur 10 getrennt ist, d.h. insbesondere jeweils einem separaten Wechselrichtereingang zugeordnet ist, kann sich die Abschattung der unteren Zeile 21 nicht auf den von der oberen Zeile 21 produzierten Strom auswirken. In analoger Weise könnte in Figur 10 der Effekt einer Teilabschattung des oberen PV-Moduls 2 der rechten Reihe 20 erfindungsgemäß dadurch minimiert werden, dass dieses PV-Modul 2 zwei horizontal verlaufende und übereinander angeordnete elektrische Zeilen aufweist, gebildet beispielsweise durch zwei elektrisch voneinander getrennte aktive Flächen 9 innerhalb des PV-Moduls 2.

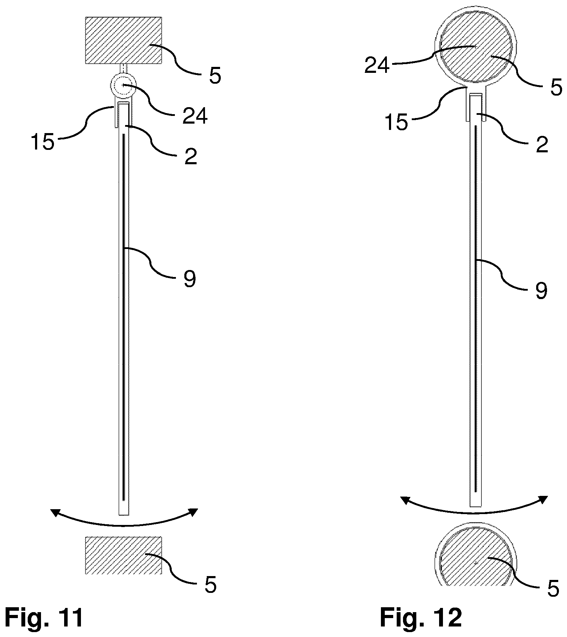

Die Figuren 11 und 12 schließlich zeigen jeweils eine Querschnittsansicht durch einen oberen und einen unteren Riegel 5, jeweils dargestellt durch die schraffierten Flächen, einer erfindungsgemäßen Tragkonstruktion 3. Hierbei sind die bifazialen PV-Module 2 so an der Tragkonstruktion 3 aufgehängt, dass sie um eine Drehachse 24 schwenken können, wie durch die Doppelpfeile angedeutet, sobald eine erhebliche Windlast auf die PV-Module 2 wirkt. Die Drehachse 24 verläuft dabei bevorzugt annähernd parallel zu den Riegeln 5. Gemäß der Erfindung kann es dabei vorteilhaft sein, wenn die Schwenkbewegung der PV-Module 2 durch eine zusätzliche Vorrichtung gedämpft wird.

Bei dem in Figur 11 gezeigten Ausführungsbeispiel ist hierzu unterhalb des oberen rechteckigen Riegels 5 ein Halteelement 15 vorgesehen, das das PV-Modul 2 beidseitig umfasst und seinerseits um die Drehachse 24 drehbar an dem oberen Riegel 5 befestigt ist.

Bei dem in Figur 12 gezeigten Ausführungsbeispiel sind die Riegel 5 hingegen mit einer runden Außenkontur ausgestaltet, sodass das Halteelement 15, welches das PV-Modul 2 hält, den Riegel 5 ringförmig umgreifen kann und somit gemeinsam mit dem PV-Modul 2 um die Drehachse 24, gebildet durch die Mittelachse des oberen Riegels 5, schwenken kann.

Zusammenfassend wird zur wirtschaftlichen und energieeffizienten Nutzung einer PV-Anlage 1 mit aufrecht stehenden, insbesondere bifazialen, PV-Modulen 2 und insbesondere zur weitgehenden Vermeidung von Abschattungen der PV-Module 2 eine sehr einfach zu fertigende und zu montierende Tragkonstruktion 3 vorgeschlagen, die durch an Kreuzungspunkten miteinander verbundene vertikale Pfosten 4 und horizontal verlaufende Riegel 5 aufgebaut ist, sodass rechtwinklige Montagefelder 6 für die einzelnen PV-Module 2 bereitgestellt werden können, wobei die Pfosten 4 und Riegel 5 vorzugsweise jeweils in materialsparender Weise durch gängige Profile 12, 21 gebildet sind und wobei eine Aufteilung der Pfosten 4 in zwei miteinander verbundene Abschnitte 7, 8 die Montage insgesamt wesentlich erleichtert.

### Bezugszeichenliste

- 1: Photovoltaik-Anlage
- 2: PV-Modul
- 3: Tragkonstruktion
- 4: Pfosten
- 5: Riegel
- 6: Montagefeld
- 7: Befestigungsabschnitt
- 8: Halteabschnitt
- 9: (obere) aktive Fläche
- 9': (untere) aktive Fläche
- 10: Halteflächen
- 11: Flansch
- 12: Profil von 4
- 13: Lasche
- 14: Öffnung, insbesondere Durchstecköffnung, von 4 (für 5)
- 15: Halteelemente
- 16: Nutabschnitt
- 17: Querschnittsverjüngung
- 18: Anlagefläche
- 19: Bewirtschaftungsfreiraum
- 20: Reihe
- 21: Profil von 5
- 22: Öffnung, insbesondere Durchstecköffnung, von 5 (für 15)
- 23: Abschrägung
- 24: Drehachse
- 25: Freiraum

## Patentansprüche

1. **Photovoltaik(PV)-Anlage (1)** mit
- mehreren bifazialen PV-Modulen (2), die aufrecht stehend an einer Tragkonstruktion (3) angeordnet sind,
- wobei die Tragkonstruktion (3) mehrere Pfosten (4) aufweist, die an oder im Erdreich befestigt, insbesondere verankert, sind,
- wobei an den Pfosten (4) Riegel (5) befestigt sind, die jeweils zwei benachbarte Pfosten (4) miteinander verbinden und
- wobei jeweils zwei Pfosten (4) und zwei Riegel (5) ein im Wesentlichen rechteckiges Montagefeld (6) definieren, in dem wenigstens ein PV-Modul (2) angeordnet ist,
**dadurch gekennzeichnet,**
- **dass** die Pfosten (4) zumindest in einen mit dem Erdreich verbundenen Befestigungsabschnitt (7) und einen damit verbundenen Halteabschnitt (8), der sich oberhalb des Befestigungsabschnitts (7) erstreckt, unterteilt sind,
- **dass** der Befestigungsabschnitt (7) und der Halteabschnitt (8) jeweils als ein Längsprofil (12) ausgestaltet sind,
- **dass** an dem Befestigungsabschnitt (7) und dem Halteabschnitt (8) jeweils korrespondierende Kontaktflächen ausgebildet sind, wobei die beiden Abschnitte (7, 8) des jeweiligen Pfostens (4) an den Kontaktflächen aneinander anliegen und somit überlappen,
- **dass** die Kontaktflächen plan ausgestaltet sind, sodass der Befestigungsabschnitt (7) und der Halteabschnitt (8) im montierten Zustand Rücken an Rücken aneinander liegen und die Überlappung zwischen Befestigungsabschnitt (7) und Halteabschnitt (8) drehbar ausgestaltet ist und
- **dass** der Halteabschnitt (8) entlang der Längsrichtung des Befestigungsabschnitts (7) verschiebbar ausgestaltet ist.

2. Photovoltaik-Anlage (1) nach Anspruch 1, wobei Abweichungen der Höhe des Befestigungsabschnitts (7) durch Ausrichten des Halteabschnitts (8) in Bezug auf den Befestigungsabschnitt (7) ausgeglichen werden können.

3. Photovoltaik-Anlage (1) nach Anspruch 1 oder 2, wobei horizontal benachbarte PV-Module (2) in vertikaler Richtung versetzt zueinander angeordnet sind.

4. Photovoltaik-Anlage (1) nach einem der vorhergehenden Ansprüche, wobei aktive Flächen (9) der PV-Module (2) von den Pfosten (4) und/oder Riegeln (5) beabstandet angeordnet sind,
- insbesondere derart, dass zumindest bis zu einem Einfallswinkel von 20°, besonders bevorzugt zumindest bis zu einem Einfallswinkel von 30°, eine Abschattung der aktiven Fläche (9) durch Pfosten (4) ausgeschlossen ist und/oder
- wobei zumindest bis zu einem Einfallswinkel von 25°, vorzugsweise zumindest bis zu einem Einfallswinkel von 30° oder sogar 40°, eine Abschattung der aktiven Fläche (9) durch Riegel (5) ausgeschlossen ist.

5. Photovoltaik-Anlage (1) nach einem der vorhergehenden Ansprüche, wobei die aktiven Flächen (9) der PV-Module (2) an einander gegenüberliegenden Seiten asymmetrisch beabstandet zu Pfosten (4) und/oder Riegeln (5) angeordnet sind und/oder
- wobei die PV-Module (2) um eine, vorzugsweise in etwa parallel zu den Riegeln (5) verlaufende, Drehachse (24) schwenkbar an der Tragkonstruktion (3) aufgehängt sind.

6. Photovoltaik-Anlage (1) nach einem der vorhergehenden Ansprüche, wobei an den Pfosten (4) Halteflächen (10) ausgebildet sind, an denen ein zugehöriger Riegel (5) flächig befestigbar ist,
- insbesondere wobei die Halteflächen (10) als Flansche (11) an einem Profil (12) und/oder als Laschen (13) an einer Öffnung (14) in einem Profil (12) ausgebildet sind.

7. Photovoltaik-Anlage (1) nach Anspruch 6, wobei die Halteflächen (10) paarweise ausgebildet sind, um einen zwischen den Halteflächen (10) eingeschobenen Riegel (5) beidseitig zu fassen, und/oder
- wobei die Riegel (5) schmaler als die Pfosten (4), insbesondere schmaler als ein Abstand zwischen paarweise ausgebildeten Halteflächen (10), ausgebildet sind.

8. Photovoltaik-Anlage (1) nach einem der vorhergehenden Ansprüche, wobei an den Pfosten (4) Durchstecköffnungen (14) ausgebildet sind, um jeweils einen Riegel (5) oder dessen Ende aufzunehmen,
- insbesondere wobei zumindest der Halteabschnitt (8) der Pfosten (4) in Form eines Omega-Profils ausgebildet ist.

9. Photovoltaik-Anlage (1) nach Anspruch 8,
- wobei in einer Durchstecköffnung (14) zwei Riegel (5) platziert sind oder
- wobei in einer Durchstecköffnung (14) nur ein Riegel (5) platziert ist, während ein weiterer Riegel (5) auf einer der Durchstecköffnung (14) gegenüberliegenden Seite des Pfostens (4) ohne Durchstecköffnung (14) und mittels am Pfosten (4) ausgebildeter Halteflächen (10) montiert ist,
- insbesondere wobei an einer Haltefläche (10) ein durch eine Durchstecköffnung (14) gesteckter Riegel (5) und ein weiterer Riegel (5) befestigt sind.

10. Photovoltaik-Anlage (1) nach einem der vorhergehenden Ansprüche, wobei die Pfosten (4), zumindest in dem Halteabschnitt (8), ein Profil (12) mit einer C-förmigen, U-förmigen, Z-förmigen oder S-förmigen Grundform aufweisen,
- insbesondere wobei an den Enden des Profils (12) zusätzliche Halteflächen (10) als Flansche (11) ausgebildet sind.

11. Photovoltaik-Anlage (1) nach einem der vorhergehenden Ansprüche, wobei die PV-Module (2) an den Riegeln (5) befestigt sind und hierzu Halteelemente (15) vorgesehen sind,
- vorzugsweise wobei die Halteelemente (15) hierzu Nutabschnitte (16) bereitstellen, in die ein Rand des jeweiligen PV-Moduls (2) eingesteckt oder einsteckbar ist,
- besonders bevorzugt wobei ein Halteelement (15) zwei gegenüberliegende Nutabschnitte (16) aufweist.

12. Photovoltaik-Anlage (1) nach einem der vorhergehenden Ansprüche, wobei die Riegel (5) an einer Unterseite eine Abschrägung (23) aufweisen.

13. Photovoltaik-Anlage (1) nach Anspruch 11, wobei die Halteelemente (15) jeweils eine Querschnittsverjüngung (17) aufweisen, sodass ein Halteelement (15) in eine an einem Riegel ausgebildete Durchstecköffnung (14) bis zu einer definierten Einstecktiefe einsteckbar oder eingesteckt ist,
- insbesondere wobei an dem Halteelement (15) eine Anlagefläche (18) ausgebildet ist mit der das Halteelement (15) flächig an dem Riegel (5) anliegt.

14. Photovoltaik-Anlage (1) nach einem der vorhergehenden Ansprüche, wobei zwischen dem Erdreich und einem untersten Riegel (5) ein Freiraum (25) freigehalten ist, insbesondere wobei der Freiraum (25) eine Höhe von wenigstens 50 cm, wenigstens 60 cm oder wenigstens 1 m aufweist,
- insbesondere wobei Reihen (20) der PV-Anlage (1) derart beabstandet angeordnet sind, dass zwischen den Reihen (20) ein Bewirtschaftungsfreiraum mit einer Breite von wenigstens 6 Metern, wenigstens 8 Metern oder wenigstens 10 Metern, besteht.

15. Photovoltaik-Anlage (1) nach einem der vorhergehenden Ansprüche,
- wobei die PV-Module (2) mit der Tragkonstruktion (3) im Wesentlichen eine Ebene bilden und/oder
- wobei die PV-Module (2) in mehreren voneinander beabstandeten Reihen (20) angeordnet sind, wobei die PV-Module (2) einer Reihe (20) im Wesentlichen eine Ebene bilden und/oder
- wobei ein Abstand zwischen zwei Reihen (20) wenigstens das Dreifache, bevorzugt wenigstens das Vierfache, besonders bevorzugt wenigstens das Fünffache einer maximalen Höhe einer aktiven Fläche (9) der PV-Anlage (1) beträgt.

## Claims

1. Photovoltaic (PV) system (1) comprising
- a plurality of bifacial PV modules (2), which are arranged upright on a support construction (3),
- wherein the support construction (3) has a plurality of posts (4) which are attached to or in, in particular are anchored to, the ground,
- wherein bars (5) which each connect two adjacent posts (4) to each other are attached to the posts (4), and
- wherein in each case two posts (4) and in each case two bars (5) define a substantially rectangular mounting field (6), in which at least one PV module (2) is arranged,
**characterized**
- **in that** the posts (4) are divided at least into an attachment portion (7), which is connected to the ground, and a holding portion (8), which is connected to the attachment portion (7) and extends above the attachment portion (7),
- **in that** the attachment portion (7) and the holding portion (8) are both designed as longitudinal profiles (12),
- **in that** in each case corresponding contact surfaces are formed on the attachment portion (7) and the holding portion (8), wherein the two portions (7, 8) of the respective post (4) rest against each other by the contact surfaces and thus overlap,
- **in that** the contact surfaces have a planar design such that the attachment portion (7) and the holding portion (8) lie back-to-back in the mounted state and the overlap between the attachment portion (7) and the holding portion (8) is configured to be rotatable, and
- **in that** the holding portion (8) is configured to be displaceable along the longitudinal extent of the attachment portion (7).

2. Photovoltaic system (1) according to Claim 1, wherein
deviations of the height of the attachment portion (7) can be compensated for by adjusting the holding portion (8) in relation to the attachment portion (7).

3. Photovoltaic system (1) according to Claim 1 or 2, wherein
horizontally adjacent PV modules (2) are arranged with an offset with respect to one another in the vertical direction.

4. Photovoltaic system (1) according to any of the preceding claims, wherein active surfaces (9) of the PV modules (2) are arranged at a distance from the posts (4) and/or bars (5),
- in particular such that shadowing of the active surface (9) due to posts (4) is ruled out at least up to an angle of incidence of 20°, with particular preference at least up to an angle of incidence of 30°, and/or
- wherein shadowing of the active surface (9) due to bars (5) is ruled out at least up to an angle of incidence of 25°, preferably at least up to an angle of incidence of 30° or even 40°.

5. Photovoltaic system (1) according to any of the preceding claims, wherein the active surfaces (9) of the PV modules (2) are arranged on mutually opposite sides with an asymmetric distance from the posts (4) and/or bars (5), and/or
- wherein the PV modules (2) are pivotably suspended at the support construction (3) about an axis of rotation (24), which preferably runs approximately parallel to the bars (5) .

6. Photovoltaic system (1) according to any of the preceding claims, wherein holding surfaces (10), on which an associated bar (5) is areally attachable, are formed on the posts (4),
- in particular wherein the holding surfaces (10) are formed as flanges (11) on a profile (12) and/or as tabs (13) at an opening (14) in a profile (12).

7. Photovoltaic system (1) according to Claim 6, wherein the holding surfaces (10) are formed in pairs in order to grip from both sides a bar (5) that is inserted between the holding surfaces (10), and/or
- wherein the bars (5) are narrower than the posts (4), in particular narrower than a distance between holding surfaces (10) which are formed in pairs.

8. Photovoltaic system (1) according to any of the preceding claims, wherein through-openings (14) are formed in the posts (4) in order to accommodate in each case one bar (5) or the end thereof,
- in particular wherein at least the holding portion (8) of the posts (4) is formed in the form of an omega profile.

9. Photovoltaic system (1) according to Claim 8,
- wherein two bars (5) are inserted in one through-opening (14) or
- wherein only one bar (5) is inserted in one through-opening (14), while a further bar (5) is mounted on a side of the post (4) that lies opposite the through-opening (14) and does not have a through-opening (14), by means of holding surfaces (10) formed on the post (4),
- in particular wherein a bar (5), which has been inserted in a through-opening (14), and a further bar (5) are attached to a holding surface (10).

10. Photovoltaic system (1) according to any of the preceding claims, wherein the posts (4) have, at least in the holding portion (8), a profile (12) with a C-shaped, U-shaped, Z-shaped or S-shaped basic shape,
- in particular wherein additional holding surfaces (10) are formed as flanges (11) on the ends of the profile (12).

11. Photovoltaic system (1) according to any of the preceding claims, wherein the PV modules (2) are attached to the bars (5) and for this purpose holding elements (15) are provided,
- preferably wherein the holding elements (15) for this purpose provide groove portions (16), in which an edge of the respective PV module (2) is inserted or insertable,
- with particular preference wherein a holding element (15) has two groove portions (16) that lie opposite each other.

12. Photovoltaic system (1) according to any of the preceding claims, wherein the bars (5) have a bevel (23) on an underside.

13. Photovoltaic system (1) according to Claim 11, wherein the holding elements (15) each have a cross-sectional narrowing (17) such that a holding element (15) is insertable or inserted in a through-opening (14), which is formed in a bar, up to a defined insertion depth,
- in particular wherein a contact surface (18) with which the holding element (15) rests areally against the bar (5) is formed on the holding element (15).

14. Photovoltaic system (1) according to any of the preceding claims, wherein a gap (25) is kept free between the ground and a lowermost bar (5),
in particular wherein the gap (25) has a height of at least 50 cm, at least 60 cm or at least 1 m,
- in particular wherein rows (20) of the PV system (1) are spaced apart from one another such that a management gap having a width of at least 6 metres, at least 8 metres or at least 10 metres exists between the rows (20).

15. Photovoltaic system (1) according to any of the preceding claims,
- wherein the PV modules (2) form substantially one plane with the support construction (3) and/or
- wherein the PV modules (2) are arranged in a plurality of mutually spaced apart rows (20), wherein the PV modules (2) of one row (20) substantially form one plane and/or
- wherein a distance between two rows (20) is at least three times, preferably at least four times, with particular preference at least five times a maximum height of an active surface (9) of the PV system (1).

## Revendications

1. Installation photovoltaïque (PV) (1), comprenant :
- une pluralité de modules PV bifaciaux (2) qui sont agencés verticalement sur une structure de support (3),
- dans laquelle la structure de support (3) présente une pluralité de montants (4) qui sont fixés, en particulier ancrés, au sol ou dans le sol,
- des traverses (5) qui sont fixées aux montants (4), lesdites traverses reliant respectivement deux montants voisins (4) entre eux, et
- dans laquelle deux montants (4) et deux traverses (5) définissent respectivement un champ de montage (6) essentiellement rectangulaire dans lequel au moins un module PV (2) est agencé,
**caractérisée en ce que**
- les montants (4) sont divisés au moins en une partie de fixation (7) reliée au sol et une partie de maintien (8) reliée à la partie de fixation (7) et qui s'étend au-dessus de celle-ci,
- la partie de fixation (7) et la partie de partie de maintien (8) sont respectivement conçues sous la forme d'un profil longitudinal (12),
- des surfaces de contact correspondantes sont formées respectivement sur la partie de fixation (7) et la partie de maintien (8), les deux parties (7, 8) d'un montant respectif (4) s'appuyant l'une contre l'autre sur les surfaces de contact et se chevauchant de cette manière,
- les surfaces de contact sont planes, de telle sorte que la partie de fixation (7) et la partie de maintien (8) se trouvent dos à dos à l'état monté et que le chevauchement entre la partie de fixation (7) et la partie de maintien (8) soit conçu de manière à pouvoir pivoter, et **en ce que**
- la partie de maintien (8) est conçue de manière à pouvoir être déplacée le long de la direction longitudinale de la partie de fixation (7).

2. Installation photovoltaïque (1) selon la revendication 1, dans laquelle des écarts de hauteur de la partie de fixation (7) peuvent être compensés en orientant la partie de maintien (8) par rapport à la partie de fixation (7).

3. Installation photovoltaïque (1) selon la revendication 1 ou 2, dans laquelle des modules photovoltaïques horizontalement voisins (2) sont décalés les uns par rapport aux autres dans la direction verticale.

4. Installation photovoltaïque (1) selon l'une quelconque des revendications précédentes, dans laquelle des surfaces actives (9) des modules photovoltaïques (2) sont agencées à distance des montants (4) et/ou des traverses (5),
- en particulier de telle sorte qu'un ombrage des surfaces actives (9) par les montants (4) soit exclu au moins jusqu'à un angle d'incidence de 20°, de préférence au moins jusqu'à un angle d'incidence de 30°, et/ou
- dans laquelle un ombrage des surfaces actives (9) par des traverses (5) est exclu au moins jusqu'à un angle d'incidence de 25°, de préférence au moins jusqu'à un angle d'incidence de 30°, voire de 40°.

5. Installation photovoltaïque (1) selon l'une quelconque des revendications précédentes, dans laquelle les surfaces actives (9) des modules photovoltaïques (2) sont agencées sur des côtés opposés à une distance asymétrique des montants (4) et/ou des traverses (5), et/ou
- dans laquelle les modules PV (2) sont suspendus à la structure de support (3) de manière à pouvoir pivoter autour d'un axe de rotation (24) qui s'étend de préférence approximativement parallèlement aux traverses (5).

6. Installation photovoltaïque (1) selon l'une quelconque des revendications précédentes, dans laquelle les montants (4) présentent des surfaces de maintien (10) sur lesquelles une traverse (5) correspondante peut être fixée à plat, et
- en particulier dans laquelle les surfaces de maintien (10) sont réalisés sous la forme de brides (11) sur un profil (12) et/ou sous la forme de languettes (13) sur une ouverture (14) dans un profil (12).

7. Installation photovoltaïque (1) selon la revendication 6, dans laquelle les surfaces de maintien (10) sont formées par paires de manière à saisir par les deux côtés une traverse (5) insérée entre les surfaces de maintien (10), et/ou
- dans laquelle les traverses (5) sont plus étroites que les montants (4), en particulier plus étroites qu'une distance entre des surfaces de maintien (10) formées par paires.

8. Installation photovoltaïque (1) selon l'une quelconque des revendications précédentes, dans laquelle des ouvertures traversantes (14) sont prévues sur les montants (4) dans la but de recevoir chacune une traverse (5) ou une extrémité de celle-ci, et
- en particulier dans laquelle au moins la partie de maintien (8) des montants (4) est réalisée sous la forme d'un profil en oméga.

9. Installation photovoltaïque (1) selon la revendication 8,
- dans laquelle deux traverses (5) sont insérées à l'intérieur d'une ouverture traversante (14), ou
- dans laquelle une seule traverse (5) est insérée à l'intérieur d'une ouverture traversante (14) alors qu'une autre traverse (5) est montée sur un côté du montant (4) opposé à l'ouverture traversante (14) dépourvu d'ouverture traversante (14) et par l'intermédiaire de surfaces de maintien (10) formées sur le montant (4), et
- en particulier dans laquelle une traverse (5) insérée à l'intérieur d'une ouverture traversante (14) et une autre traverse (5) sont fixées à une surface de maintien (10).

10. Installation photovoltaïque (1) selon l'une quelconque des revendications précédentes, dans laquelle les montants (4) présentent, au moins dans la partie de maintien (8), un profil (12) dont la forme de base est en C, en U, en Z ou en S, et
- en particulier dans laquelle des surfaces de maintien supplémentaires (10) sont prévues sous la forme de brides (11) au niveau des extrémités du profil (12).

11. Installation photovoltaïque (1) selon l'une quelconque des revendications précédentes, dans laquelle les modules photovoltaïques (2) sont fixés sur les traverses (5) et des éléments de maintien (15) sont prévus à cette fin,
- de préférence dans laquelle les éléments de maintien (15) comportent à cet effet des parties de rainure (16) à l'intérieur desquelles un bord du module PV respectif (2) est inséré ou peut être inséré, et
- de préférence dans laquelle un élément de maintien (15) comporte deux parties de rainure opposées (16).

12. Installation photovoltaïque (1) selon l'une quelconque des revendications précédentes, dans laquelle les traverses (5) présentent un chanfrein (23) sur une face inférieure.

13. Installation photovoltaïque (1) selon la revendication 11, dans laquelle les éléments de maintien (15) présentent chacun un rétrécissement de section transversale (17), de telle sorte qu'un élément de maintien (15) puisse être inséré ou soit inséré à l'intérieur d'une ouverture d'insertion (14) formée sur une traverse jusqu'à une profondeur d'insertion définie, et
- en particulier dans laquelle une surface d'appui (18) est formée sur l'élément de maintien (15), surface d'appui par l'intermédiaire de laquelle l'élément de maintien (15) s'appuie à plat sur la traverse (5).

14. Installation photovoltaïque (1) selon l'une quelconque des revendications précédentes, dans laquelle un espace libre (25) est maintenu libre entre le sol et une traverse inférieure (5), en particulier dans laquelle l'espace libre (25) présente une hauteur d'au moins 50 cm, d'au moins 60 cm voire d'au moins 1 mètre, et
- en particulier dans laquelle des rangées (20) de l'installation photovoltaïque (1) sont agencées à une distance telle qu'un espace libre d'exploitation soit prévu entre les rangées (20) d'une largeur d'au moins 6 mètres, d'au moins 8 mètres voire d'au moins 10 mètres.

15. Installation photovoltaïque (1) selon l'une quelconque des revendications précédentes,
- dans laquelle les modules PV (2) forment essentiellement un plan avec la structure de support (3), et/ou
- dans laquelle les modules PV (2) sont agencés en une pluralité de rangées (20) espacées les unes des autres, les modules PV (2) d'une rangée (20) formant sensiblement un plan, et/ou
- dans laquelle une distance entre deux rangées (20) est égale au moins au triple, de préférence au moins au quadruple, et de façon particulièrement préférée au moins au quintuple d'une hauteur maximale d'une surface active (9) de l'installation PV (1).
